# FASCICULE DE BREVET EUROPEEN

(11) **EP 3 110 682 B1**
(45) Date de publication et mention de la délivrance du brevet: **17.10.2018**
(21) Numéro de dépôt: 15709133.1
(22) Date de dépôt: 27.02.2015
(51) Int. Cl.: B62D 35/00

(54) **DISPOSITIF DE GUIDAGE D'AIR ARRIERE POUR VEHICULE**
VORRICHTUNG ZUR LEITUNG VON FAHRZEUGHECKLUFT
DEVICE FOR GUIDING VEHICLE REAR AIR

(30) Priorité: 27.02.2014 BE 201400134; 23.12.2014 BE 201400839
(43) Date de publication de la demande: 04.01.2017
(73) Titulaire: Bringloe, Benjamin, 1380 Couture Saint Germain (BE)
(72) Inventeur: HILHORST, Laurentius, B-4910 Theux (BE)
(74) Mandataire: Office Kirkpatrick
(86) Numéro de dépôt international: PCT/EP2015/054160
(87) Numéro de publication internationale: WO 2015/128473

(56) Documents cités:
- WO-A1-2013/178366
- DE-A1-102011 122 299
- US-A- 5 280 990
- US-A1- 2013 076 064

## Description

### 1. Domaine de l'invention

L'invention concerne un dispositif de guidage d'air arrière pour véhicule, notamment un véhicule utilitaire, et un assemblage de véhicules utilitaires.

Plus particulièrement, l'invention concerne un dispositif de guidage d'air arrière pour un véhicule utilitaire de transport comprenant au moins une porte arrière.

### 2. Solutions de l'art antérieur

Les dispositifs déflecteurs d'air arrière permettent d'améliorer l'aérodynamique des véhicules, cette amélioration conduisant à une diminution de la consommation de carburant. Ceci est tout particulièrement important dans le domaine du transport routier de marchandise, la quantité de carburant consommé pour le transport desdites marchandises ayant une incidence sur leur coût ainsi que sur leur empreinte écologique. De nombreuses solutions ont été proposées pour solutionner ce problème de consommation de carburant.

Le document US 4 214 787 décrit un dispositif de guidage d'air arrière sous forme de deux premiers moyens de guidage d'air verticaux incurvés raccordés directement à l'extrémité arrière d'un véhicule, le positionnement desdits moyens de guidage d'air verticaux étant commandé à l'aide d'un système automatique. Le dispositif déflecteur ne présente aucun moyen de guidage d'air horizontal au niveau du toit du véhicule. En outre, il présente le risque d'un endommagement par compression des moyens de guidages d'air verticaux entre les parois latérales et les portes arrière du véhicule lors de leur ouverture. Finalement, la forme incurvée des moyens de guidage rend impossible l'ouverture complète des portes arrières. Par ouverture complète, on entend une rotation des portes d'un angle de 265° au moins, préférentiellement de 270°.

Les documents US 5 498 059, US 6 485 087, WO 2008/024386 et WO 2013/050090 divulguent un dispositif de guidage d'air arrière sous forme de deux premiers moyens de guidage d'air verticaux et d'un second moyen de guidage d'air horizontal raccordés directement aux portes arrières du véhicule par un système de charnière. Toutefois, le positionnement des moyens de guidage d'air sur les portes engendre un décalage entre les parois du véhicule et la surface des moyens de guidage d'air nuisible à la performance aérodynamique. En outre le dispositif divulgué dans US 6485 087 présente le risque d'un endommagement par compression des moyens de guidages d'air verticaux entre les parois latérales et les portes arrière du véhicule lors de leur ouverture. Par ailleurs, le dispositif décrit dans WO 2013/050090 présente un risque d'un endommagement par compression des moyens de guidages d'air verticaux entre les parois latérales et les portes arrière du véhicule lors de leur ouverture et un risque pour les autres usagers lors d'une collision du fait de la présence d'une arrête vive sur les premiers moyens de guidage d'air verticaux de faible épaisseur. Finalement, le dispositif décrit dans WO 2008/024386 est susceptible de provoquer des blessures en cas de collision arrière par un autre usager, l'extrémité arrière des moyens de guidage d'air verticaux présentant une arête vive, conséquence de la faible épaisseur des moyens de guidage d'air.

Le document US 2011/0084516 décrit un dispositif de guidage d'air arrière sous forme de deux premiers moyens de guidage d'air verticaux et d'un second moyen de guidage d'air horizontal raccordés directement aux portes arrière du véhicule par un système de charnière. Toutefois, ledit dispositif de guidage d'air arrière présente un risque d'un endommagement par compression des moyens de guidages d'air verticaux entre les parois latérales et les portes arrière du véhicule lors de leur ouverture. En outre, le positionnement des moyens de guidage d'air sur les portes engendre un décalage entre les parois du véhicule et la surface des moyens de guidage d'air nuisible à la performance aérodynamique. Finalement, le dispositif de guidage d'air arrière présenté est complexe par le nombre élevé d'éléments le constituant.

Le document WO 2011/019768 divulgue un dispositif de guidage d'air arrière comprenant sous forme de deux premiers moyens de guidage d'air verticaux et deux seconds moyens de guidage d'air horizontaux solidarisé entre eux. Ledit dispositif de guidage d'air arrière est particulièrement encombrant du fait de sa structure nécessitant un démontage en vue d'ouvrir les portes arrière du véhicule. En outre, les matériaux de type bâche utilisés pour réaliser ledit dispositif déflecteur sont peu résistants, voire dangereux pour les autres usagers de la route l'extrémité arrière des moyens de guidages d'air comprenant des baleines en tube présentant un risque d'empalement.

Le document US 4 458 936 décrit un dispositif de guidage d'air arrière sous forme de carénage compact sensiblement rigide. Les premiers moyens de guidage d'air de forme incurvée sont raccordés directement à la paroi latérale du véhicule par un système de pivot. Ce type de moyen de fixation engendre une trainée aérodynamique diminuant l'efficacité du dispositif de guidage d'air arrière. En outre, l'ouverture complète des portes arrières est rendue difficile de par l'emplacement des pivots et la forme des moyens de guidage d'air.

Le document DE 20 2009 015 009 U divulgue un dispositif de guidage d'air arrière constitué de deux premiers moyens de guidage d'air verticaux et d'un second moyen de guidage d'air horizontal, lesdits moyens étant respectivement fixés sur les parois latérales arrières et sur la partie supérieure arrière du véhicule. Une telle disposition entraîne un risque d'endommagement par compression des deux premiers moyens de guidage d'air verticaux lors de l'ouverture des portes, engendre une trainée aérodynamique diminuant l'efficacité du dispositif de guidage d'air arrière, augmente les risques d'arrachage lorsque le véhicule est en mouvement, augmente le risque d'endommagement du second moyen de guidage d'air horizontal par compression lors de la mise à quai du véhicule et empêche une ouverture complète des portes du véhicule.

DE 10 2008 036 888 décrit un dispositif déflecteurs d'air arrière sous forme de deux premiers moyens de guidage d'air verticaux et d'un second moyen de guidage d'air horizontal, lesdits moyen étant raccordés à l'extrémité arrière du véhicule. Le dispositif décrit présente également des inconvénients similaires à ceux exposé çi-avant à savoir un risque d'endommagement par compression des deux premiers moyens de guidage d'air verticaux lors de l'ouverture des portes,. Un risque de provoquer des blessures en cas de collision arrière par un autre usager, l'extrémité arrière des moyens de guidage d'air verticaux présentant une arête vive, conséquence de la faible épaisseur des moyens de guidage d'air, l'utilisation de moyens de guidage de forme incurvée rend impossible l'ouverture complète des portes arrières.

Les documents WO 2013/178366 et WO 2013/178365 décrivent des dispositifs déflecteur d'air arrière sous forme de deux premiers moyens de guidage d'air verticaux et d'un second moyen de guidage d'air horizontal attaché directement sur les portes arrières. Lesdits dispositifs présentent du fait de leur structure un risque d'endommagement par compression des moyens de guidage d'air verticaux lors de l'ouverture des portes arrières du véhicule entre les parois latérales et lesdites portes, un risque d'endommagement par compression du moyen de guidage d'air horizontal lors de la mise à quai du véhicule, ledit moyen de guidage d'air horizontal dépassant l'extrémité supérieure de la porte arrière du véhicule, un risque de blessure en cas de collision arrière par un autre usager, l'extrémité arrière des moyens de guidages latéraux présentant une arrête vive qui est une conséquence de leur faible épaisseur et de son axe de pivot ou charnière. En outre, lesdits dispositifs ne sont pas repliables en cas de choc. Les documents DE 20 2009 014 476 U et DE 20 2009 014 510 U des dispositifs déflecteur d'air arrière sous forme de deux premiers moyens de guidage d'air verticaux, chaque premier moyen de guidage d'air vertical étant relié au véhicule à l'aide d'un bras rotatif muni d'un pivot attaché à la paroi latérale du véhicule. De tels dispositifs présentent l'inconvénient de présenter une longueur de moyen de guidage qui est limitée, n'intègrent pas de moyen de guidage horizontale sur le bras rotatif, ne sont pas repliables en cas de choc, de par leur position les premiers moyens de guidage verticaux entraînent une augmentation de la traînée aérodynamique du véhicule ainsi que des risque d'arrachage lorsque le véhicule est en mouvement et ne sont pas repliables en cas de choc.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir un dispositif de guidage d'air arrière pour véhicule de transport de type semi-remorque, ledit véhicule étant muni de deux portes.

Un autre objectif de l'invention, dans au moins un de ses modes de réalisation, est de mettre en oeuvre un dispositif de guidage d'air arrière permettant une ouverture complète desdites portes à angle de 270° sans risque d'endommagement dudit dispositif.

L'invention, dans au moins un de ses modes de réalisation, a encore pour objectif d'offrir un rendement aérodynamique optimal et une facilité d'utilisation du dispositif de guidage d'air arrière.

L'invention, dans au moins un de ses modes de réalisation, a aussi pour objectif d'offrir un dispositif de guidage d'air arrière comprenant un nombre réduit de pièces mécaniques en vue de faciliter sa maintenance.

### 4. Exposé de l'invention

Conformément à un mode de réalisation particulier, l'invention concerne une structure support rigide articulée pour un dispositif de guidage d'air arrière pour un véhicule, ledit véhicule comprenant au moins une porte arrière, ladite structure comprenant :
- au moins deux premiers moyens de fixation, lesdits premiers moyens de fixation étant aptes à être fixés sur ladite porte arrière dudit véhicule et permettant la rotation de ladite structure par rapport à ladite porte,
- au moins un premier élément vertical,
- au moins un premier moyen de guidage d'air situé sur le premier élément vertical, ledit premier moyen de guidage d'air étant fixé audit premier élément vertical par au moins un second moyen de fixation permettant la rotation dudit moyen de guidage d'air par rapport audit premier élément vertical, ledit premier élément vertical comprenant au moins une unité de verrouillage,
- au moins deux éléments horizontaux inférieur et supérieur, reliant les au moins deux premiers moyens de fixation au premier élément vertical,
- au moins un troisième moyen de fixation temporaire aptes à fixer la structure rigide articulée sur la porte arrière du véhicule, ledit au moins troisième moyen de fixation temporaire se situant sur le premier élément vertical et/ou sur au moins un élément horizontal, de préférence sur les au moins deux éléments horizontaux,

Le principe général de l'invention repose sur le fait que le dispositif de guidage d'air arrière comprend une structure rigide sur laquelle est monté au moins un élément de guidage, ladite structure rigide étant telle qu'elle :
- est fixée à la porte arrière du véhicule à l'aide d'au moins deux premiers moyens de fixation, lesdits moyens étant aptes à permettre le pivotement de la structure rigide sur un axe vertical comprend au moins un premier élément vertical et au moins un premier moyen de guidage d'air situé sur le premier élément vertical, ledit premier moyen de guidage d'air étant fixé audit premier élément vertical par au moins un second moyen de fixation permettant la rotation autour d'un axe vertical dudit moyen de guidage d'air par rapport audit premier élément vertical de manière à prolonger la face latérale du véhicule à l'aide dudit premier moyen de guidage ; ledit premier élément vertical comprenant au moins une unité de verrouillage permettant de bloquer la position de l'élément de guidage dans l'alignement de la paroi latérale du véhicule de manière à prolonger ladite paroi ou contre la porte arrière dans un plan perpendiculaire à ladite paroi,
- comprend au moins deux éléments horizontaux inférieur et supérieur, reliant les au moins deux premiers moyens de fixation au premier élément vertical,
- comprend un troisième moyen de fixation temporaire fixant la structure sur le véhicule afin d'empêcher temporairement toute rotation de la structure rigide, ledit au moins troisième moyen de fixation temporaire se situant sur le premier élément vertical et/ou sur au moins un élément horizontal, de préférence sur les au moins deux éléments horizontaux, plus préférentiellement sur les au moins deux éléments horizontaux à une distance comprise entre 200mm et 700mm à partir de la paroi latérale du véhicule sur laquelle vient se rabattre la structure rigide amovible.

Ainsi, l'invention repose sur une approche tout à fait nouvelle et inventive. Le dispositif de guidage d'air arrière pour véhicule selon l'invention permet grâce à sa structure rigide articulée :
- d'améliorer le rendement aérodynamique, le positionnement des moyens de fixation n'entraînant aucune trainée aérodynamique diminuant l'efficacité du rendement aérodynamique du dispositif de guidage d'air arrière,
- d'éviter tout risque d'endommagement par compression des moyens de guidages d'air verticaux entre les parois latérales et les portes arrières du véhicule lors de leur ouverture, lesdits moyens de guidage d'air se trouvant en dehors de cette zone de par le mouvement de pivotement de la structure support rigide articulée par rapport à la porte,
- d'obtenir une ouverture complète des portes et ainsi faciliter les opérations d'embarquement et débarquement des marchandises indépendamment de la forme des moyens de guidage,
- de disposer d'un dispositif de guidage d'air arrière de structure simple et peu encombrante nécessitant peu de manipulation lors de son utilisation,
- de diminuer les risque de blessures en cas de collision arrière par un autre usager, l'épaisseur et la nature des moyens de guidage d'air n'étant pas limitée de par les propriétés du dispositif de guidage d'air arrière ; en outre, l'utilisation d'une unité de verrouillage de type pneumatique procure aux moyens de guidage d'air un mouvement rotatif amorti entre la position de roulage et de repli; permettant l'absorption de chocs en cas de collision arrière, une fois le choc amorti, les moyens de guidage d'air reprennent la position de roulage,
- d'éviter des risques d'arrachage des moyens de guidage d'air verticaux lorsque le véhicule est en mouvement ou au repos, lesdits moyens étant respectivement situés dans le prolongement des parois latérales du véhicule ou contre la porte arrière dudit véhicule,
- de mettre à disposition un dispositif de guidage d'air arrière nécessitant peu de moyens de fixation sur la (les) porte(s) arrière(s) du véhicule.

Par les termes « ouverture complète de la (des) porte(s) », on entend désigner une rotation de la (des) porte(s) d'un angle de 265° au moins, préférentiellement de 270°, sur un axe vertical.

Par les termes « premiers moyens de fixation étant fixés sur ladite porte arrière », on entend désigner que lesdits premiers moyens sont situé sur la (les) partie(s) ou face(s) extérieure(s) de la porte.

Par les termes « horizontal ou vertical », on entend désigner un élément situé dans un plan horizontal ou vertical par rapport à la route.

Par les termes « troisième moyen de fixation temporaire », on entend désigner le fait que le troisième moyen de fixation permet d'obtenir une fixation momentanée et reproduite dans le temps du premier élément vertical et/ou horizontal sur le véhicule.

La longueur des premiers moyens de guidage d'air est sensiblement égale à la hauteur de la paroi latérale du véhicule, la hauteur de la paroi latérale du véhicule désignant la distance entre la partie supérieure du véhicule ou toit et la partie inférieure du véhicule ou bas de caisse. Par les termes « sensiblement égale », on entend désigner le fait que la longueur des premiers moyens de guidage d'air est comprise entre 70% à 100% de la hauteur de la paroi latérale, préférentiellement comprise entre 90% à 100%, plus préférentiellement comprise entre 95% et 100%, le plus préférentiellement égale à la hauteur de la paroi latérale de manière à ce que le premier moyen de guidage d'air prolonge sensiblement la paroi latérale correspondante lorsque le dispositif de guidage d'air arrière est en position de roulage. Dans le cas d'un véhicule de type semi-remorque, la longueur des premiers moyens de guidage d'air est comprise entre 2800 et 3000 mm, préférentiellement entre 2850 et 2960 mm, plus préférentiellement entre 2900 et 2960 mm, le plus préférentiellement égale à 2930 mm.

La largeur des premiers moyens de guidage d'air est comprise entre 0,05 et 0,5 fois la largeur de la partie arrière du véhicule, préférentiellement entre 0,10 et 0,4 fois. Dans le cas d'un véhicule de type semi-remorque, la largeur des moyens de guidage d'air verticaux est comprise entre 200 et 1250 mm, préférentiellement entre 300 et 700 mm, plus préférentiellement entre 400 et 600 mm, le plus préférentiellement égale à 500 mm.

Dans un mode de réalisation avantageux, le au moins un premier moyen de guidage d'air situé sur le premier élément vertical est un moyen de guidage d'air du type déflecteur d'air.

Par déflecteur d'air, on entend un profil ou panneau permettant de dévier l'écoulement d'un fluide (ici en l'occurrence l'air) d'une paroi en utilisant les propriétés de l'air (effet Coanda et viscosité), vers une autre paroi ne se trouvant pas dans le même plan ou angle que la paroi initiale. Ledit fluide en suit la paroi et subit une déviation de son écoulement avec une trajectoire différente de celle qu'il avait en amont.

Dans un autre mode de réalisation avantageux, le au moins un premier moyen de guidage d'air situé sur le premier élément vertical est un moyen de guidage d'air du type diffuseur d'air.

Par moyen de guidage d'air du type diffuseur d'air, on entend un système de réduction de la consommation de carburant dans un véhicule du type de ceux décrits dans le document EP 1 860 023 A2, minimisant la résistance aérodynamique causée par le mouvement vers l'avant du véhicule, consistant à fournir de l'air à la partie arrière du véhicule, où une dépression est causée suite au mouvement vers l'avant.

Un tel diffuseur d'air comprend une structure tubulaire ou enveloppe placée autour du bord latéral ou supérieur de la partie arrière du véhicule, sans entraver l'ouverture complète de la porte arrière du véhicule, la structure tubulaire ou enveloppe prenant de l'air à la partie supérieure ou latérale du véhicule, durant le mouvement vers l'avant, canalisant et menant celui-ci vers la zone de dépression à l'arrière du véhicule; la structure tubulaire ou enveloppe comprenant en outre une entrée qui prend l'air de la partie latérale ou supérieure du véhicule durant le mouvement vers l'avant et une sortie dirigée latéralement ou vers le bas, canalisant l'air vers la zone de dépression à l'arrière du véhicule ; la section de l'entrée étant plus petite que la section de la sortie, afin d'empêcher des pressions élevées ; les parois supérieure et inférieure (ou latérales) de la structure tubulaire étant connectées à des nervures de renforcement formant des tunnels ou des chambres. Un diffuseur transforme l'énergie cinétique en énergie de pression.

Selon un mode de réalisation avantageux du diffuseur d'air, les nervures de renforcement du diffuseur sont des plaques verticales (ou horizontales) soudées aux parois supérieure et inférieure (latérales) de la structure tubulaire, et les nervures de renforcement sont pourvues de trous ou ouvertures afin d'équilibrer les pressions dans les tunnels ou les chambres formés entre elles.

Avantageusement, la structure support rigide articulée selon l'invention comprend au moins un second élément vertical se fixant au aux moins deux premiers moyens de fixation, lesdits premier élément vertical, second élément vertical et éléments horizontaux inférieur et supérieur formant un cadre de forme quadrilatère régulier.

Par les termes « cadre de forme quadrilatère régulier », on entend désigner une structure articulée ayant une formée carrée ou rectangulaire.

Ainsi, la présence de ce second élément vertical permet de diminuer la fatigue aux points de jonction entre les deux seconds éléments horizontaux et le premier élément vertical ou/et entre les premiers moyens de fixation et les deux seconds éléments horizontaux et également d'augmenter la rigidité de la structure. Lesdits premier élément vertical, second élément vertical et éléments horizontaux inférieur et supérieur peuvent être en matière plastique et/ou métallique, sous la forme d'un profil extrudé et/ou une pièce usinée.

Selon un mode de réalisation préférentiel, la structure support rigide articulée selon l'invention est telle que les au moins deux premier moyens de fixation sont de type pivot. Par les termes « de type pivot », on entend désigner toute pièce constituant le point d'appui ou l'extrémité de l'axe autour duquel tourne la structure support rigide.

On entend par pivot un assemblage de au moins deux pièces composé d'un axe autour duquel tourne une autre pièce. Lesdites pièces peuvent être fabriquées dans différents matériaux tels que les alliages métalliques, les plastiques ou les composites en fonction des caractéristiques techniques et d'utilisation.

Ainsi, les premiers moyens de type pivot permettent de constituer les deux points de l'axe de rotation vertical de la structure support rigide par rapport à la porte.

Selon un mode de réalisation préféré, la structure support rigide articulée selon l'invention est telle que le au moins troisième moyen de fixation temporaire est de type verrou. Par les termes «type verrou », on entend désigner un système de fermeture constitué d'une ou plusieurs pièces coulissantes s'engageant dans une autre pièce fixe dans le but de bloquer tout mouvement entre lesdites pièces pendant un temps donné. Ce type de fixation peut être fabriqué dans différents matériaux tels que les alliages métalliques, les plastiques ou les composites en fonction des caractéristiques techniques et d'utilisation.

Ainsi, l'utilisation de ce type de fixation est facile de par sa mécanique simplifiée et résistante. De plus, ladite fixation peut être séparée de son support en vue de son remplacement ou de son entretien.

Selon un mode de réalisation préféré, la structure support rigide articulée selon l'invention est telle que le deuxième moyen de fixation est de type pivot.

Ainsi l'emploi de ce type de pivot facilite le placement et l'utilisation du premier moyen de guidage d'air. Sa mécanique est simple, robuste et facile à mettre en oeuvre.

Selon un mode de réalisation préféré, la structure support rigide articulée selon l'invention est telle que l'unité de verrouillage est de type mécanique tel qu'un verrou sur ressort ou pneumatique tel qu'un amortisseur pneumatique.

Ainsi l'unité de verrouillage permet un positionnement prédéfini des moyens de guidage d'air en position de repli et de roulage par rapport à la structure support rigide. Le verrouillage de type pneumatique procure aux moyens de guidage d'air un mouvement rotatif amorti entre la position de roulage et de repli; permettant l'absorption de chocs en cas de collision arrière. Une fois le choc amorti, les moyens de guidage d'air reprennent la position de roulage.

La position de roulage correspond à un positionnement des premier(s) moyens de guidage d'air dans le prolongement respectivement de la (des) paroi(s) latérale(s). Par opposé, la position de repli correspond à un positionnement des premier(s) moyens de guidage d'air tel que ces derniers sont rabattus sur la(es) porte(s) arrière(s) du véhicule.

Selon un mode de réalisation préféré, la structure support rigide articulée selon l'invention est tel que la structure support rigide articulée comprend un joint périphérique interstitiel entre ladite structure support rigide articulée et le véhicule. Le matériau constituant ledit joint est sélectionné parmi les matériaux de nature polymère extrudé ou moulé.

Ainsi l'utilisation d'un joint interstitiel permet d'améliorer l'écoulement d'air sur l'ensemble véhicule-dispositif de guidage d'air arrière.

Selon un autre mode de réalisation avantageux, la structure support rigide articulée selon l'invention comprend au moins un second moyen de guidage d'air situé sur l'élément horizontal supérieur, ledit second moyen de guidage d'air étant fixé par au moins un quatrième moyen de fixation audit élément supérieur horizontal et permettant la rotation dudit second moyen de guidage d'air par rapport audit élément supérieur horizontal.

Dans ce mode de réalisation, la structure support rigide articulée est telle qu'au moins un second moyen de guidage d'air situé sur l'élément horizontal supérieur, ledit second moyen de guidage d'air étant fixé par au moins un quatrième moyen de fixation audit élément supérieur horizontal et permettant la rotation selon un axe horizontale dudit second moyen de guidage d'air par rapport audit élément supérieur horizontal de manière à prolonger la face supérieure ou toit du véhicule lorsque l'élément de guidage vertical se trouve dans l'alignement de la paroi latérale du véhicule de manière à prolonger ladite paroi.

Le dispositif de guidage d'air arrière pour véhicule selon ce mode de réalisation permet grâce à sa structure rigide articulée d'éviter le risque d'endommagement du second moyen de guidage d'air horizontal par compression lors de la mise à quai du véhicule,

Dans ce mode de réalisation, il est avantageux que les deux premiers moyens de fixations soient fixés sur ladite porte arrière côté battant. Les au moins deux éléments horizontaux inférieur et supérieur, reliant les au moins deux premiers moyens de fixation au premier élément vertical ont alors sensiblement la même largeur les ouvrants de porte qui constituent la porte arrière du véhicule. Par ouvrant gauche (droit) de la porte arrière d'un véhicule, on entend la demi-porte arrière gauche (droit) du véhicule, qui constitue, avec la demi-porte arrière droite (gauche), la porte arrière du véhicule.

Par les termes « battant de porte », on entend désigner l'extrémité de la partie verticale d'un ouvrant de porte comprenant les moyens d'ouverture dudit ouvrant de porte tels que clenche, ladite extrémité étant située à l'opposé de la partie dudit ouvrant de porte comprenant les moyens de rotations tels que charnière par exemple.

La longueur des seconds moyens de guidage d'air est sensiblement égale à la moitié de la largeur de la partie supérieure du véhicule ou toit dans le cas d'un véhicule comprenant deux portes arrières et sensiblement égale à la largeur de la de la partie supérieure ou toit du véhicule pour un véhicule ne comprenant qu'une seule porte arrière. Par les termes « sensiblement égale », on entend désigner le fait que la longueur des seconds moyens de guidage d'air est comprise entre 85% à 100% de la moitié de la largeur de la partie supérieure du véhicule ou toit de la hauteur de la paroi latérale, préférentiellement comprise entre 90% à 100%, plus préférentiellement comprise entre 95% et 100%, le plus préférentiellement égale à la moitié de la largeur de la partie supérieure du véhicule ou toit pour un véhicule comprenant deux portes arrières. Dans le cas d'un véhicule de type semi-remorque, la longueur des seconds moyens de guidage d'air est comprise entre 1100 et 1350 mm, préférentiellement entre 1200 et 1300 mm, plus préférentiellement entre 1225 et 1275 mm, le plus préférentiellement égale à 1250 mm. La largeur des seconds moyens de guidage d'air est comprise entre 0,05 et 0,5 fois la largeur de la partie arrière du véhicule, préférentiellement entre 0,10 et 0,4 fois. Dans le cas d'un véhicule de type semi-remorque, la largeur des seconds moyens de guidage d'air verticaux est comprise entre 200 et 1250 mm, préférentiellement entre 300 et 700 mm, plus préférentiellement entre 400 et 600 mm, le plus préférentiellement égale à 500 mm.

Selon un mode de réalisation préféré, la structure support rigide articulée selon l'invention est telle que le premier et le second moyen de guidage d'air est de type panneau. Par le terme « panneau », on entend désigner un élément plan ou incurvé en matière plastique et/ou métallique et/ou composite. Ce panneau peutêtre formé d'une ou plusieurs pièces thermoformées et/ou extrudées. L'extrémité du panneau est formée de telle sorte que celle-ci présente un rebord de sécurité intérieur évitant les arêtes vives et servant de support à un marquage signalétique réfléchissant.

Ainsi, l'utilisation d'un tel panneau permet de contrôler différents paramètres du panneau lors de sa fabrication comme son incurvation, sa rigidité, sa flexibilité, le traitement de surface, son poids et permet d'éviter les vibrations perturbatrices ; tout en conservant un rendement aérodynamique optimal et en augmentant la sécurité des autres usagers.

Selon un mode de réalisation préféré, la structure support rigide articulée selon l'invention est telle que le second moyen de guidage d'air comprend au moins deux panneaux reliés entre eux par des moyens de rigidification, de préférence les au moins deux panneaux et les moyens de rigidification sont thermoformés.

Ainsi la multiplicité des panneaux constituant le second moyen de guidage d'air permet d'adapter le dispositif de guidage d'air arrière à des hauteurs variables de partie supérieure ou de toiture de véhicule.

Selon un mode de réalisation préféré, la structure support rigide articulée selon l'invention est telle que le second moyen de guidage d'air comprend un module de rappel. Par les termes « module de rappel », on entend désigner un ressort dont la fonction est de se déformer sous l'action d'une force, puis de restituer l'énergie emmagasinée à la reprise de sa forme initiale.

Ainsi le module de rappel permet au second moyen de guidage d'air de rester en contact permanent avec le premier moyen de guidage d'air, en l'appuyant sur le premier moyen de guidage d'air ; évitant tous risques de sauts ou de vibrations du second moyen de guidage d'air.

Selon un mode de réalisation préféré, la structure support rigide articulée selon l'invention est telle que lesdits premier élément vertical, second élément vertical et éléments horizontaux inférieur et supérieur comprennent un module de rigidification tel qu'une équerre ou un épaississement desdits éléments à leur point de jonction. Par les termes « module de rigidification », on entend désigner au moins une pièce rigide fixée à au moins deux éléments. Le matériau de ladite pièce est sélectionné parmi les matériaux métalliques ou plastiques.

Ainsi le module de rigidification permet d'éviter la déformation de la structure support rigide lorsque des contraintes mécaniques ou physiques sont exercées sur ladite structure.

L'invention concerne également un dispositif de guidage d'air arrière pour véhicule comprenant au moins une porte arrière, ledit dispositif de guidage d'air arrière étant constitué d'au moins une structure rigide articulée selon l'invention.

Selon un premier mode de réalisation avantageux, le dispositif de guidage d'air arrière pour un véhicule, ledit véhicule comprenant une porte arrière, ladite porte arrière comprenant un ouvrant gauche et un ouvrant droit, est tel qu'il comprend une première structure support rigide articulée selon l'invention, ladite première structure support rigide articulée étant fixée sur l'ouvrant gauche de ladite porte arrière, et en ce qu'il comprend une seconde structure support rigide articulée selon l'invention, la seconde structure support articulée étant fixée sur l'ouvrant droit de ladite porte arrière.

Selon un mode de réalisation avantageux du mode réalisation précédent, le dispositif de guidage d'air arrière selon l'invention comprend des structures support rigide articulées qui comprennent au moins un second moyen de guidage d'air sur leur élément horizontal supérieur (second mode de réalisation des structures support rigide articulées), et la longueur de leurs éléments horizontaux inférieurs et supérieurs est avantageusement sensiblement égale à la largeur d'un ouvrant de la porte arrière du véhicule, les au moins deux premiers moyens de fixation de la structure support rigide articulée étant fixés côté battant des ouvrants de la porte arrière du véhicule, l'expression « coté battant » ayant été définie précédemment. Par les termes « sensiblement égale », on entend désigner le fait que la longueur des éléments horizontaux inférieurs et supérieurs est comprise entre 85% à 100% de la largeur d'un ouvrant de la porte arrière du véhicule, préférentiellement comprise entre 90% à 100%, plus préférentiellement comprise entre 95% et 100%.

Cette configuration permet de dimensionner les seconds moyens de guidage d'air situés sur les éléments horizontaux supérieurs et inférieurs de manière à ce qu'ils couvrent l'ensemble de la largeur du véhicule, ce qui fournit une déflection d'air optimale à l'aide de ces moyens.

Selon un mode d'utilisation du dispositif de guidage d'air arrière selon l'invention, celui-ci est tel qu'il comprend les étapes suivantes :
- pour passer ledit dispositif de guidage d'air arrière d'une position de roulage à une position de repli :
   - déverrouiller le premier moyen de guidage d'air par déverrouillage de l'unité de verrouillage,
   - pivoter le premier moyen de guidage d'air par rotation sur base du deuxième moyen de fixation afin d'orienter le premier moyen de guidage d'air dans un plan parallèle au plan comprenant la porte arrière du véhicule,
   - le second moyen de guidage d'air étant en contact par recouvrement/friction avec le premier moyen de guidage d'air, cette action entraîne automatiquement le basculement du second moyen de guidage d'air sous l'effet de son poids et/ou du module de rappel, ledit second moyen de guidage d'air se trouvant en position finale dans un plan parallèle au plan comprenant la (les) porte(s) arrière(s),
   - déverrouiller la structure support rigide en libérant le troisième moyen de fixation temporaire se situant sur le premier élément vertical et/ou sur au moins un élément horizontal, de préférence sur les au moins deux éléments horizontaux, plus préférentiellement sur les au moins deux éléments horizontaux à une distance comprise entre 400mm et 700mm à partir de la paroi latérale du véhicule sur laquelle vient se rabattre la (les) porte(s),
   - la (les) porte(s) arrière(s) peut(vent) alors être elle(s)-même(s) déverrouillée(s).
- pour passer ledit dispositif de guidage d'air arrière d'une position de repli à une position de roulage :
   - pivoter le premier moyen de guidage d'air par rotation sur base du second moyen de fixation afin d'orienter le premier moyen de guidage d'air en direction d'un plan parallèle aux plans comprenant les parois latérales du véhicule, de préférence le premier moyen de guidage est orienté dans le même plan que le plan comprenant le plan de la paroi parallèle que ledit premier moyen de guidage d'air prolonge,
   - verrouiller le premier moyen de guidage d'air par verrouillage de l'unité de verrouillage,
   le second moyen de guidage d'air étant en contact par recouvrement/friction avec le premier moyen de guidage d'air, cette action entraîne automatiquement le basculement du second moyen de guidage d'air, de préférence dans le même plan que le plan de la paroi supérieure ou toit que ledit second moyen de guidage d'air prolonge.

Selon un autre mode de réalisation avantageux, le dispositif de guidage d'air arrière selon l'invention comprend des structures support rigide articulées sans second moyen de guidage d'air sur leur élément horizontal supérieur (premier mode de réalisation de réalisation des structures support rigide articulées), et comprend un moyen de guidage d'air, le moyen de guidage d'air étant fixé sur le toit du véhicule.

Ainsi, ce mode de réalisation pour le dispositif de guidage d'air est également compatible avec des véhicules dont la hauteur du toit est variable, par exemple à l'aide d'un vérin pneumatique ou hydraulique, dans le but de s'adapter aux contraintes de son chargement. Etant donné que dans ce dernier mode de réalisation, le moyen de guidage d'air sur l'élément horizontal supérieur des structures support rigide articulées est remplacé par un moyen de guidage d'air fixé directement sur le toit du véhicule, ce dernier moyen de guidage d'air se trouve toujours dans l'alignement du toit du véhicule, et offre par conséquent des propriétés aérodynamiques optimales quelle que soit la hauteur de celui-ci.

Selon un mode de réalisation avantageux de ce dernier mode de réalisation, la longueur de leurs éléments horizontaux inférieurs et supérieurs est sensiblement égale à la moitié de la largeur d'un ouvrant de la porte arrière du véhicule, les au moins deux premiers moyens de fixation de la structure support rigide articulée étant fixés respectivement en bas au centre et en haut au centre des ouvrants de la porte arrière du véhicule. Par les termes « sensiblement égale », on entend désigner le fait que la longueur des éléments horizontaux inférieurs et supérieurs est comprise entre 80% à 120% de la moitié de la largeur d'un ouvrant de la porte arrière du véhicule, préférentiellement comprise entre 90% à 110%, plus préférentiellement comprise entre 95% et 105%.

Ainsi, ce mode de réalisation offre donc un encombrement et un poids minimisés pour le déflecteur d'air en comparaison avec le second mode de réalisation. Un tel positionnement des moyens des premiers moyens de fixation permet par ailleurs de réduire le moment de force sur les charnières des ouvrants gauche et droit de la porte arrière.

Selon un mode de réalisation avantageux, le moyen de guidage d'air fixé sur le toit du véhicule est de type déflecteur d'air.

Selon un mode de réalisation avantageux, le moyen de guidage d'air fixé sur le toit du véhicule est de type diffuseur d'air.

Ainsi, il a pu être mis en évidence qu'une telle combinaison entre des structures support rigide articulées et un moyen de guidage d'air de type diffuseur d'air sur le toit du véhicule offre des performances optimales d'un point de vue aérodynamique et par conséquent en terme de réduction de la consommation de carburant. L'utilisation des structures support rigide articulées telles que décrites permet un dégagement total de la zone de dispersion de l'air à l'arrière du véhicule de par l'absence, au sein d'un dispositif de guidage d'air, d'élément additionnel de rigidification et/ou de liaison entre la porte arrière du véhicule, la structure et/ou l'élément de guidage d'air de type déflecteur. La présence de ce type d'élément additionnel de rigidification et/ou de liaison crée en effet une obstruction au bon écoulement du flux aérodynamique du diffuseur.

La combinaison entre des structures support rigide articulées équipées de moyens de guidage d'air verticaux de type déflecteur et un moyen de guidage d'air de type diffuseur sur le toit du véhicule délimite le flux aérodynamique à l'arrière du véhicule en flux horizontal et verticaux. En effet, l'utilisation de moyens de guidage d'air verticaux de type déflecteur isole et protège la zone de diffusion d'air arrière du moyen de guidage d'air horizontal supérieur de type diffuseur des flux aérodynamiques verticaux de la partie arrière du véhicule. Les flux aérodynamiques horizontaux et verticaux ne se croisant pas, l'écoulement général à l'arrière du véhicule s'en retrouve amélioré grâce à la diminution des perturbations d'écoulement.

Selon un mode de réalisation avantageux des déflecteurs d'air arrière décrits ci-dessus, le dispositif de guidage d'air arrière selon l'invention est tel qu'un moyen de maintien additionnel de la structure support rigide est fixé sur le véhicule.

Ainsi le moyen de maintien additionnel permet de réduire la fatigue mécanique engendrée au niveau des premiers moyens de fixation notamment. L'invention concerne également un véhicule comprenant un dispositif de guidage d'air arrière selon l'un quelconque des modes de réalisation détaillés ci-dessus.

L'invention concerne également les utilisations des dispositifs déflecteurs d'air arrières tels que décrits précédemment.

Selon un mode d'utilisation préféré des modes précédents, celui-ci est tel que l'ouverture complète de la (des) porte(s) arrière(s) se fait par l'intermédiaire de la (des) structure(s) support(s) rigide(s) articulée(s), la(es) porte(s) arrière(s) étant directement reliée(s) par les au moins deux premiers moyens de fixation à la (aux) porte(s) arrière(s), la manipulation de la (des) structure(s) support(s) rigide(s) articulée(s) contrôlant l'angle d'ouverture de la (des) porte(s) arrière(s),

Selon un mode d'utilisation préféré des deux modes précédents, celui-ci est tel que le véhicule est un véhicule utilitaire.

Par les termes « véhicule utilitaire », on entend désigner tout type de véhicule de transport tel que camionnette, camion, véhicule articulé muni d'une semi-remorque.

Selon un mode d'utilisation préféré du mode précédent, celui-ci est tel que le véhicule est un véhicule articulé muni d'une semi-remorque ou un camion comprenant deux portes arrières, chacune de ces portes étant munie du dispositif selon l'invention.

Par le terme « semi-remorque », on entend une remorque routière destinée au transport de marchandises dont la particularité est qu'elle repose sur un ou plusieurs essieux à l'arrière et sur le véhicule tracteur à l'avant par l'intermédiaire d'une plateforme appelée sellette, de sorte que le tracteur supporte une partie notable du poids de la remorque et de son chargement.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
La figure 1 montre le synoptique d'un dispositif de guidage d'air arrière selon un premier mode de réalisation de l'invention monté sur un véhicule utilitaire constitué de deux structures support rigide articulées dans une vue arrière en perspective avec deux portes arrières fermées (5, 6) ; ledit dispositif de guidage d'air arrière est dans une position de roulage.
La figure 2 montre le synoptique d'un dispositif de guidage d'air arrière selon un second mode de réalisation de l'invention monté sur un véhicule utilitaire constitué de deux structures support rigide articulées comprenant des seconds moyens de guidage d'air, dans une vue arrière en perspective avec deux portes arrières fermées; ledit dispositif de guidage d'air arrière est dans une position de roulage.
La figure 3 montre une vue en coupe transversale du véhicule utilitaire muni du dispositif de guidage d'air arrière présenté à la figure 2, ladite coupe étant vue en perspective de dessous avec deux portes arrières fermées.
La figure 4 décrit une vue plus détaillée de la partie supérieure gauche du véhicule utilitaire muni de dispositif de guidage d'air arrière présenté à la figure 2.
La figure 5 décrit une vue plus détaillée de la partie inférieure gauche du véhicule utilitaire muni de dispositif de guidage d'air arrière présenté à la figure 2.
La figure 6 illustre de façon détaillée l'agencement de la partie inférieure d'un dispositif de guidage d'air arrière selon l'invention sur la partie arrière d'un véhicule utilitaire présenté à la figure 2.
La figure 7 montre une vue arrière en perspective d'un véhicule utilitaire avec deux portes arrières fermées, muni d'un dispositif de guidage d'air arrière selon la figure 2, ledit dispositif étant en position de repli.
La figure 8 montre le synoptique d'un dispositif de guidage d'air arrière selon un troisième mode de réalisation de l'invention monté sur un véhicule utilitaire, constitué de deux structures support rigide articulées et de moyens de guidage d'air du type diffuseur d'air installés sur le toit du véhicule, dans une vue arrière en perspective avec deux portes arrières fermées; ledit dispositif de guidage d'air arrière est dans une position de roulage.
La figure 9 montre une vue en coupe transversale du véhicule utilitaire muni du dispositif de guidage d'air arrière présenté à la figure 8, ladite coupe étant vue en perspective de dessous avec deux portes arrières fermées (5, 6).
La figure 10 décrit une vue plus détaillée de la partie inférieure gauche du véhicule utilitaire muni de dispositif de guidage d'air arrière présenté à la figure 8.
La figure 11 illustre de façon détaillée l'agencement de la partie inférieure d'un dispositif de guidage d'air arrière selon l'invention sur la partie arrière d'un véhicule utilitaire présenté à la figure 8.
La figure 12 décrit une vue plus détaillée de la partie supérieure gauche du véhicule utilitaire muni de dispositif de guidage d'air arrière présenté à la figure 8.
La figure 13 montre une vue arrière en perspective d'un véhicule utilitaire avec deux portes arrières fermées, muni d'un dispositif de guidage d'air arrière selon la figure 8, ledit dispositif étant en position de repli.
La figure 14 montre une vue arrière en perspective d'un véhicule utilitaire avec deux portes arrières fermées, muni d'un dispositif de guidage d'air arrière selon la figure 8, les deux structures support rigide articulées ayant pivoté de 90°.
La figure 15 montre une vue arrière en perspective d'un véhicule utilitaire avec deux portes arrières fermées, muni d'un dispositif de guidage d'air arrière selon la figure 8, les deux structures support rigide articulées ayant pivoté jusqu'à ce que les premiers moyens de guidage d'air soient en contact avec la porte arrière du véhicule.
La figure 16 montre une vue arrière de côté d'un véhicule utilitaire muni d'un dispositif de guidage d'air arrière selon la figure 8, avec deux portes arrières ouvertes à un angle de 90°.
La figure 17 montre une vue arrière de côté d'un véhicule utilitaire muni d'un dispositif de guidage d'air arrière selon la figure 8, avec deux portes arrières ouvertes à un angle de 266°; dont le déploiement du dispositif de guidage d'air arrière en position de repli est terminé sans endommagement de ce dernier par compression entre les parois latérales et les portes arrières.
La figure 18 illustre les flux d'air entrant en jeu lors du déplacement vers l'avant d'un véhicule utilitaire muni d'un dispositif de guidage d'air arrière selon la figure 8.
Les figures 19 et 20 illustrent les flux d'air entrant en jeu lors du déplacement vers l'avant d'un véhicule utilitaire muni d'un dispositif de guidage d'air arrière selon la figure 8, selon des configurations différentes de la hauteur du toit dudit véhicule.
La figure 21 montre une vue détaillée d'une unité de verrouillage et de pivot du premier moyen de guidage d'air présente dans un dispositif de guidage d'air arrière selon l'invention.

### 6. Description d'au moins un mode de réalisation de l'invention

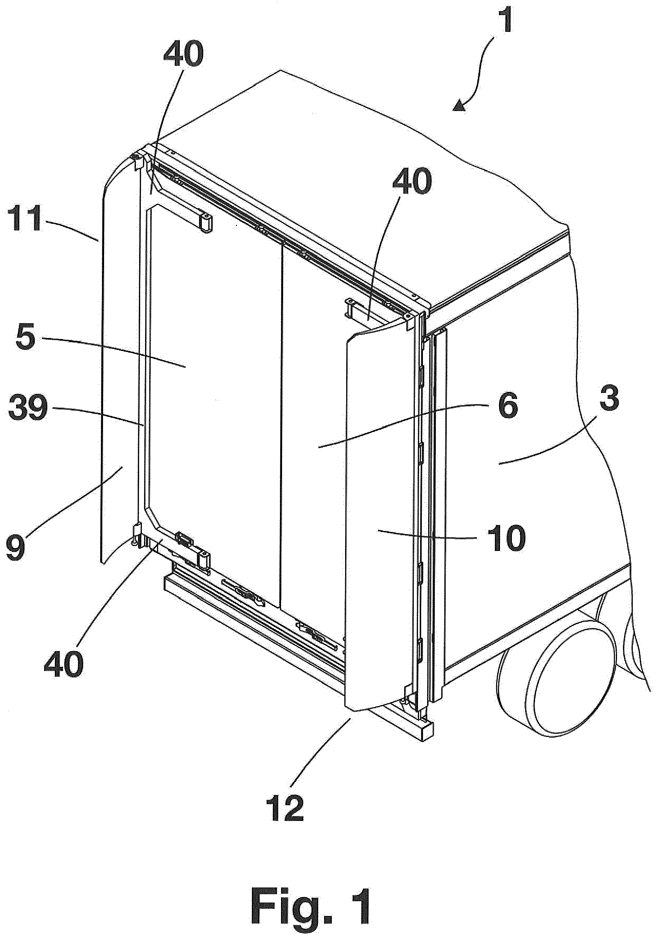

On présente, en relation avec les figures 1 à 14, des modes de réalisation d'un dispositif de guidage d'air arrière (2) selon l'invention monté sur un véhicule utilitaire (1). Comme indiqué sur la figure 1, le dispositif de guidage d'air arrière selon un premier mode de réalisation est constitué de deux structures supports articulées (11, 12) comprenant chacune respectivement un premier moyen de guidage d'air (9, 10). Les premiers moyens de guidage d'air (9, 10) se présentent sous forme de panneaux incurvés. Ledit dispositif de guidage d'air arrière (2) est représenté dans une position de roulage. La longueur des premiers moyens de guidage d'air (9, 10) est sensiblement égale, préférentiellement égale, à la hauteur des parois latérales (3) du véhicule (1) de manière à prolonger lesdites parois (3) du véhicule utilitaire (1) lorsque celui se déplace, la hauteur d'une la paroi latérale (3) du véhicule utilitaire (1) désignant la distance entre la partie supérieure du véhicule ou toit (4) et la partie inférieure du véhicule ou bas de caisse.

Selon ce mode de réalisation, le dispositif de guidage d'air arrière selon l'invention est tel qu'une structure support articulée (11, 12) a préférentiellement une longueur de 2940 mm, une largeur de 600 mm et une épaisseur de 40 mm. Le premier moyen de guidage d'air (9, 10) a une longueur de 2930mm, une largeur de 500mm et une épaisseur de 55 mm. Ledit premier moyen de guidage d'air est formé d'une ou plusieurs pièces thermoformées et/ou extrudées en matière plastique et/ou métallique.

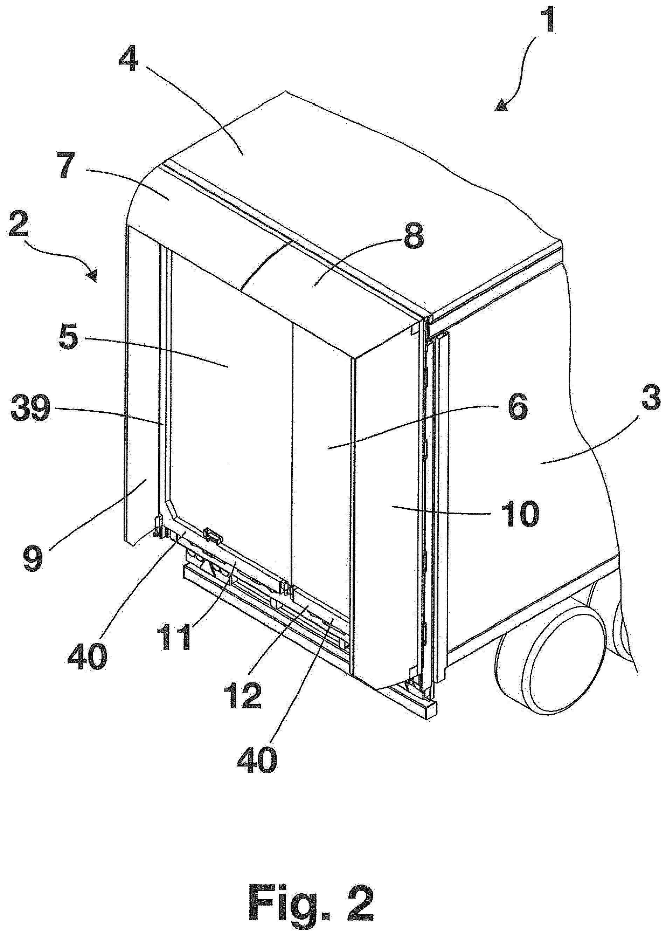

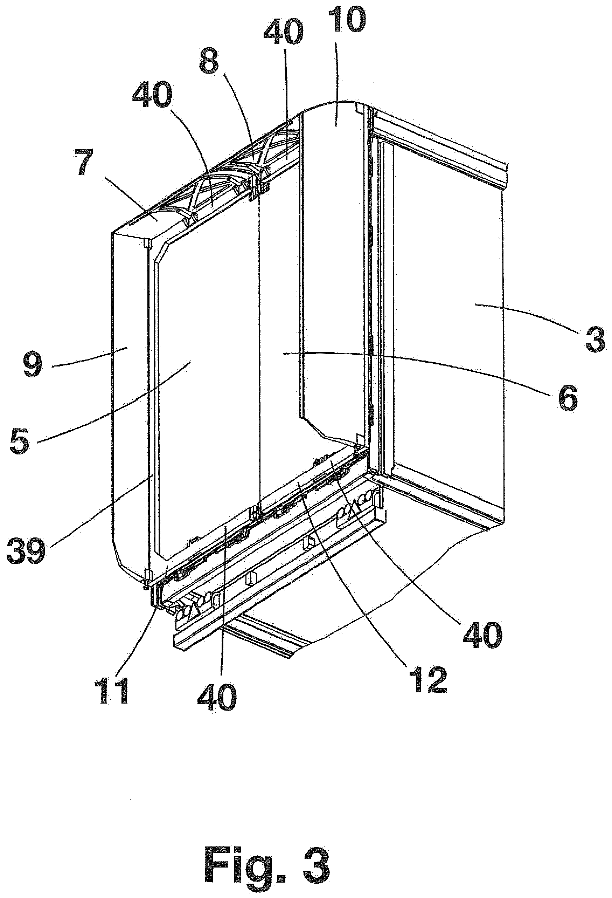

Les figures 2 à 7 illustrent un second mode de réalisation d'un dispositif de guidage d'air arrière selon l'invention. Comme indiqué sur les figures 2 et 3, selon ce mode de réalisation, les structures supports rigides articulées (11, 12) comprennent des seconds moyens de guidage d'air (7, 8) sur l'élément horizontal supérieur (40, 401). Par rapport au premier mode de réalisation, la présence de ces seconds moyens de guidage d'air améliore encore la déflection d'air, ce qui permet de réduire encore plus la consommation de carburant. La longueur des seconds moyens de guidage d'air (7, 8) est sensiblement égale, préférentiellement égale, à la moitié de la largeur de la partie supérieure du véhicule ou toit (4) de manière à prolonger partie supérieure ou toit du véhicule utilitaire (1) lorsque celui-ci se déplace.

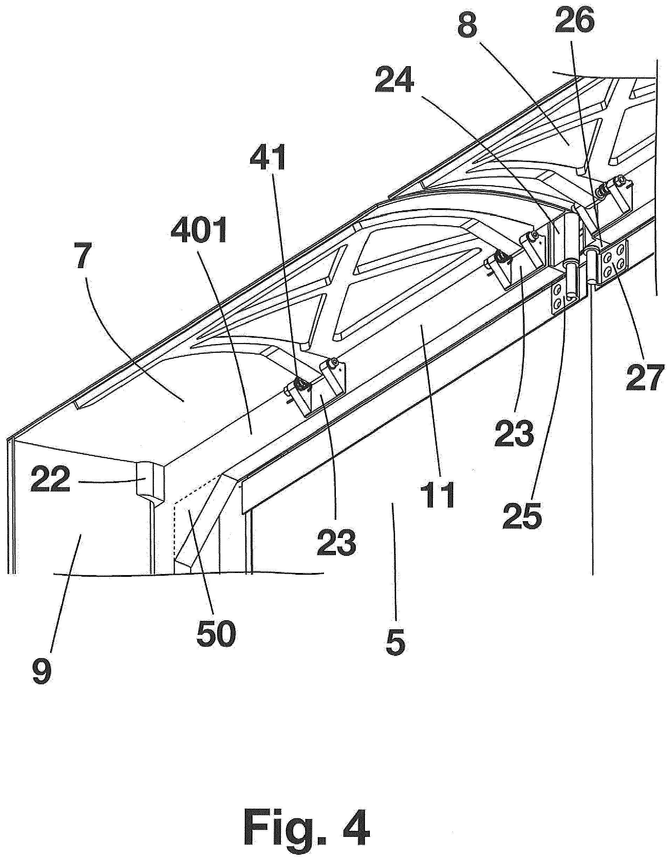

La figure 4 décrit de façon détaillée l'agencement de la partie supérieure d'un dispositif de guidage d'air arrière selon l'invention sur la partie supérieure arrière d'un véhicule utilitaire. Cette figure représente de manière schématique le positionnement de premiers moyens de fixation (24, 25, 26, 27) de type pivot sur la partie supérieure des structures support articulées et des portes du véhicule côté battant ainsi que la disposition des seconds moyens de guidage d'air (7, 8). Plus particulièrement, la figure 4 schématise la partie supérieure gauche du dispositif de guidage d'air arrière (2) selon l'invention. La partie gauche dudit dispositif de guidage d'air arrière comprend une structure support rigide articulée (11) fixée sur le haut de la porte arrière (5) du véhicule utilitaire, côté battant de porte, à l'aide d'un premier moyen de fixation (24, 25) de type pivot. Un second moyen de guidage d'air (7) muni de son module de rappel (41) est fixé sur l'élément horizontal supérieur (401) à l'aide de deux quatrièmes moyens de fixation (23). En outre, la figure 4 représente également la manière dont s'effectue la jonction entre le premier (9) et le second (7) moyen de guidage d'air. Le premier moyen de guidage d'air (9) est fixé sur l'élément vertical (39) à l'aide d'un second moyen de fixation, une partie seulement dudit second moyen étant représentée (22). Selon ce mode de réalisation, le dispositif de guidage d'air arrière selon l'invention est tel que les premiers moyens de fixation de type pivot se composent par exemple de deux plusieurs pièces métalliques ; les unes en alliage d'aluminium (24, 26) et les autres en alliage d'acier incorporant les axes de pivot (25, 27). Le quatrième moyen de fixation (23) est préférentiellement composé d'une pièce moulée ou usinée en alliage d'aluminium ou d'acier et d'un boulon en alliage d'acier. Le module rappel (41) est préférentiellement constitué d'un matériau de nature alliage d'acier ressort.

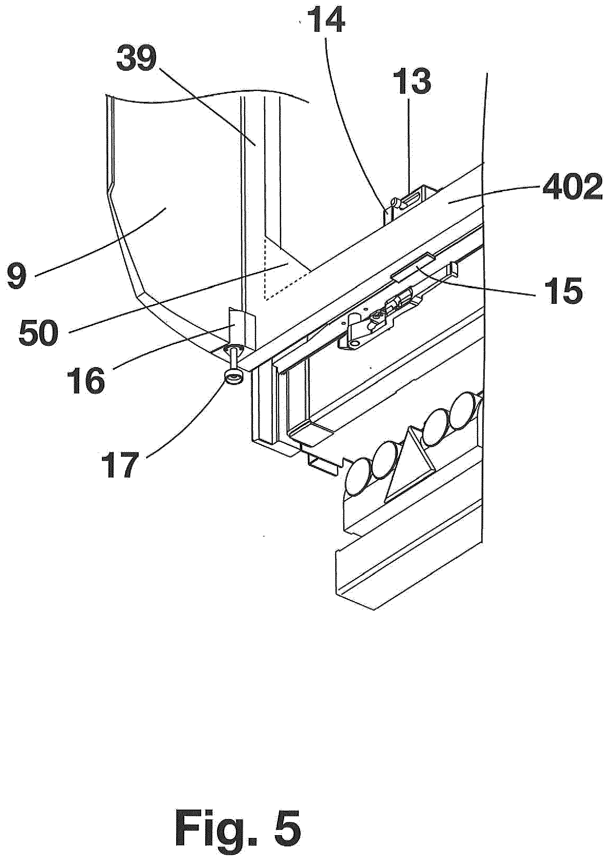

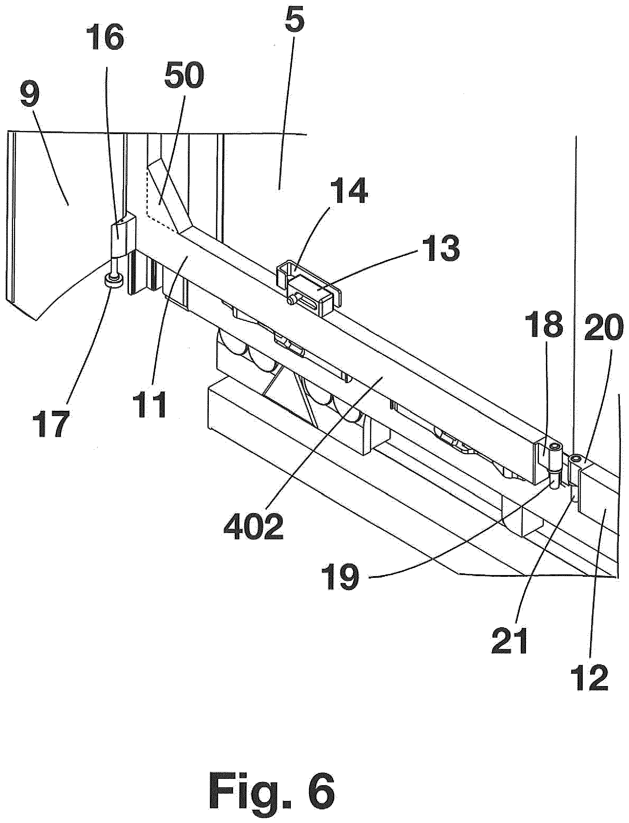

Les figures 5 et 6 illustrent une vue détaillée de la partie inférieure gauche du véhicule utilitaire muni de dispositif de guidage d'air arrière constitué de deux structures supports rigides articulées (11, 12), lesdites structures support articulées étant respectivement fixées au bas des portes arrières du véhicule côté battant à l'aide de premiers moyens de fixation (18, 19, 20, 21) de type pivot. Les figures 3 et 4 schématisent plus particulièrement, la partie inférieure gauche du dispositif de guidage d'air arrière (2) selon l'invention. La partie gauche dudit dispositif de guidage d'air arrière comprend une structure support rigide articulée (11) fixée au bas de la porte arrière (5) du véhicule utilitaire, côté battant de porte, à l'aide d'un premier moyen de fixation (18, 19) de type pivot. Un premier moyen de guidage d'air (9) est fixé au bas d'un premier élément vertical (39) à l'aide d'un second moyen de fixation (16) de type pivot, ledit premier élément vertical (39) comprenant une unité de verrouillage (17) mécanique de type verrou sur ressort. Un troisième moyen de fixation temporaire (13, 14) de type verrou est situé sur l'élément horizontal inférieur (402). Un moyen de maintien additionnel (15) est fixé sur la porte arrière (5). Un module de rigidification (50) sous forme d'un épaississement de la jonction entre le premier élément vertical (39) et le second élément horizontal (402) est également représenté, ledit module étant de même matière que le premier élément vertical (39)

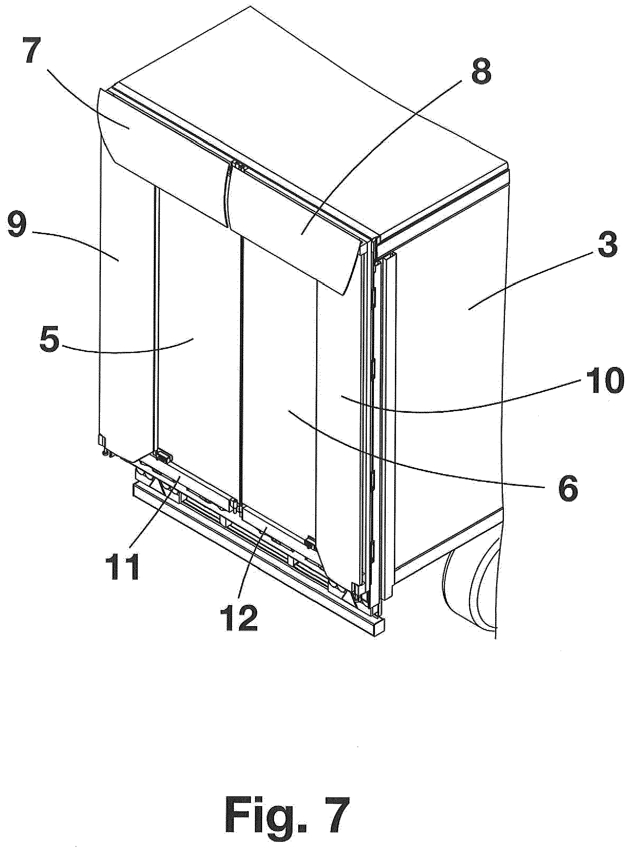

La figure 7 montre une vue arrière en perspective d'un véhicule utilitaire avec deux portes arrières fermées (5, 6), muni d'un dispositif de guidage d'air arrière selon le second mode de réalisation de l'invention, ledit dispositif étant en position de repli. Le dispositif de guidage d'air arrière comprend deux structures supports articulées (11, 12) comprenant chacune respectivement un premier moyen de guidage d'air (9, 10) et un second moyen de guidage d'air (7, 8). La longueur des seconds moyens de guidage d'air (7, 8) est sensiblement égale, préférentiellement égale, à la moitié de la largeur de la partie supérieure du véhicule ou toit (4). La longueur des premiers moyens de guidage d'air (9, 10) est sensiblement égale, préférentiellement égale, à la hauteur de la paroi latérale (3) du véhicule.

Selon ce second mode de réalisation, le dispositif de guidage d'air arrière selon l'invention est tel que les premiers moyens de fixation de type pivot se composent de deux plusieurs pièces métalliques ; les unes en alliage d'aluminium (18, 20) et les autres en alliage d'acier incorporant les axes de pivotement (19, 21). Le matériau utilisé pour le premier élément vertical (39) et les éléments horizontaux (401, 402) est de nature métallique de type alliage d'aluminium, sous forme d'un profil extrudé. Le second moyen de fixation (16) est composé d'une pièce principale en alliage d'aluminium et d'un axe de pivotement en alliage d'acier. L'épaisseur du second moyen de pivot est de 55 mm. L'unité de verrouillage (17) est incluse dans le second moyen de fixation (16), ladite unité est formée d'un axe en alliage d'acier entouré d'un ressort en alliage d'acier. Le troisième moyen de fixation temporaire est constitué d'une pièce coulissante (13) en alliage d'acier s'engageant dans une autre pièce fixe (14) de type tôle pliée en alliage d'acier inoxydable. Le moyen de maintien additionnel (15) se compose d'une tôle pliée en alliage d'acier inoxydable.

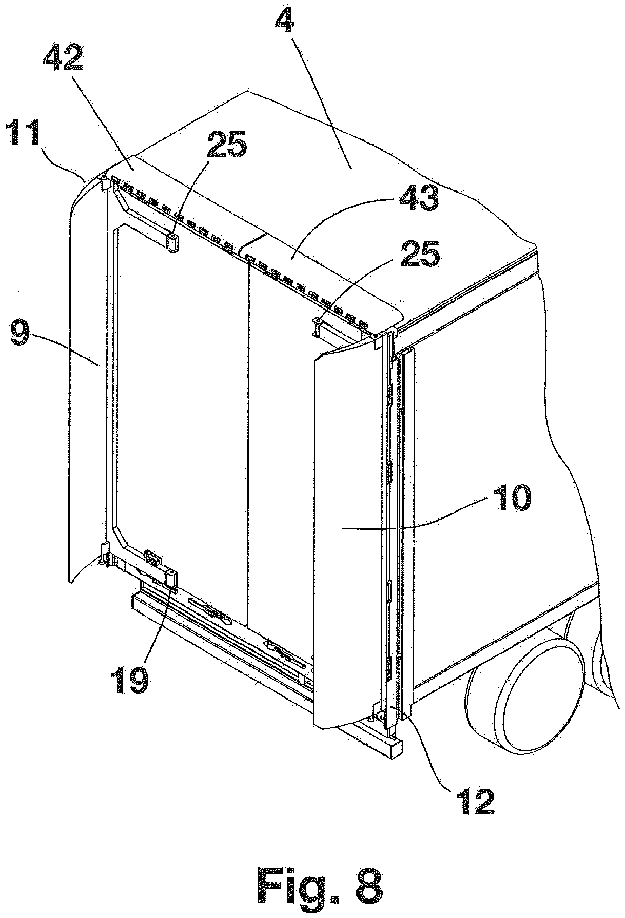

Les figures 8 à 21 illustrent un troisième mode de réalisation du déflecteur d'air arrière selon l'invention. Selon ce mode de réalisation, le déflecteur comprend deux structures supports rigides articulées (11, 12) et deux moyens de guidage d'air du type diffuseur d'air (42, 43) installés sur le toit (4) du véhicule.

Par moyen de guidage d'air du type diffuseur d'air, on entend un système de réduction de la consommation de carburant dans un véhicule du type de ceux décrits dans le document EP 1 860 023 A2, minimisant la résistance aérodynamique causée par le mouvement vers l'avant du véhicule, consistant à fournir de l'air à la partie arrière du véhicule, où une dépression est causée suite au mouvement vers l'avant.

De tels diffuseurs d'air (42, 43) comprennent une structure tubulaire ou enveloppe placée autour du bord latéral ou supérieur de la partie arrière du véhicule, sans entraver l'ouverture complète de la porte arrière du véhicule, la structure tubulaire ou enveloppe prenant de l'air à la partie supérieure ou latérale du véhicule, durant le mouvement vers l'avant, canalisant et menant celui-ci vers la zone de dépression à l'arrière du véhicule; la structure tubulaire ou enveloppe comprenant en outre une entrée (44) qui prend l'air de la partie latérale ou supérieure du véhicule durant le mouvement vers l'avant et une sortie (45) dirigée latéralement ou vers le bas, canalisant l'air vers la zone de dépression à l'arrière du véhicule ; la section de l'entrée (44) étant plus petite que la section de la sortie (45), afin d'empêcher des pressions élevées ; les parois supérieure et inférieure (ou latérales) de la structure tubulaire étant connectées à des nervures de renforcement formant des tunnels ou des chambres. Un diffuseur transforme l'énergie cinétique en énergie de pression.

Selon un mode de réalisation avantageux du diffuseur d'air, les nervures de renforcement du diffuseur sont des plaques verticales (ou horizontales) soudées aux parois supérieure et inférieure (latérales) de la structure tubulaire, et les nervures de renforcement sont pourvues de trous ou ouvertures afin d'équilibrer les pressions dans les tunnels ou les chambres formés entre elles.

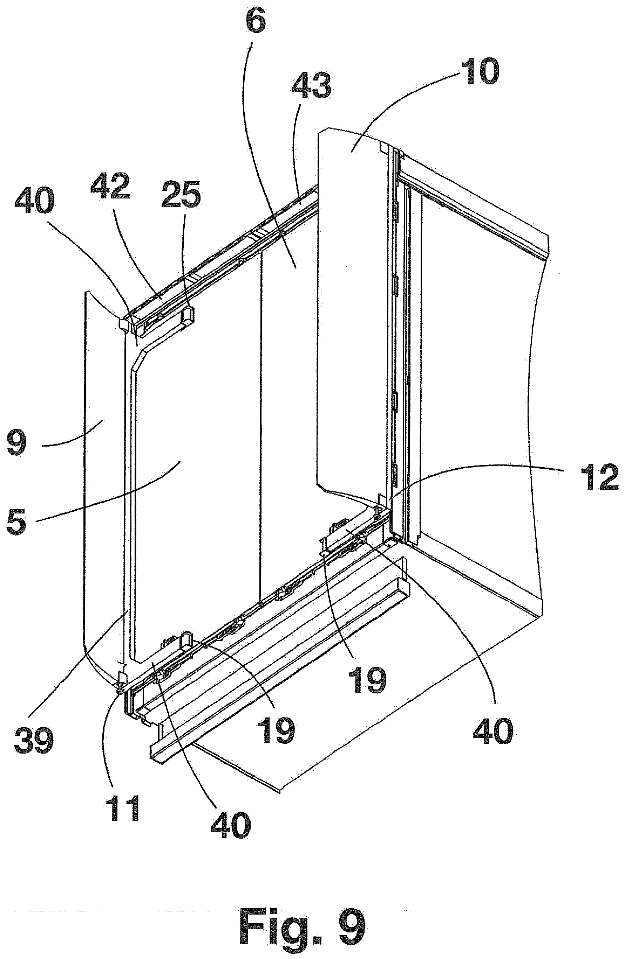

Comme illustré aux figures 8 et 9, dans ce troisième mode de réalisation, les premiers moyens de fixation (19, 25) de type pivot sont positionnés au centre des ouvrants gauche (5) et droit (6) de la porte arrière (5, 6). Les éléments horizontaux inférieurs et supérieurs (40) ont par conséquent une longueur environ égale à la moitié de la largeur des ouvrants de la porte arrière (5, 6) du véhicule. Ce mode de réalisation offre donc un encombrement et un poids minimisés pour le déflecteur d'air en comparaison avec le second mode de réalisation. Un tel positionnement des premiers moyens de fixation (19, 25) permet par ailleurs de réduire le moment de force sur les charnières des ouvrants gauche (5) et droit (6) de la porte arrière (5, 6).

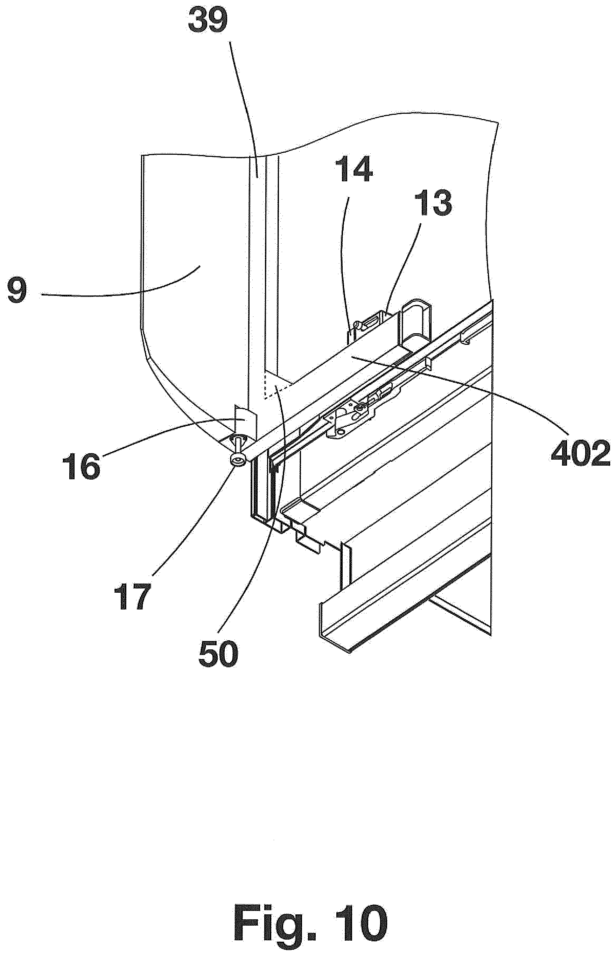

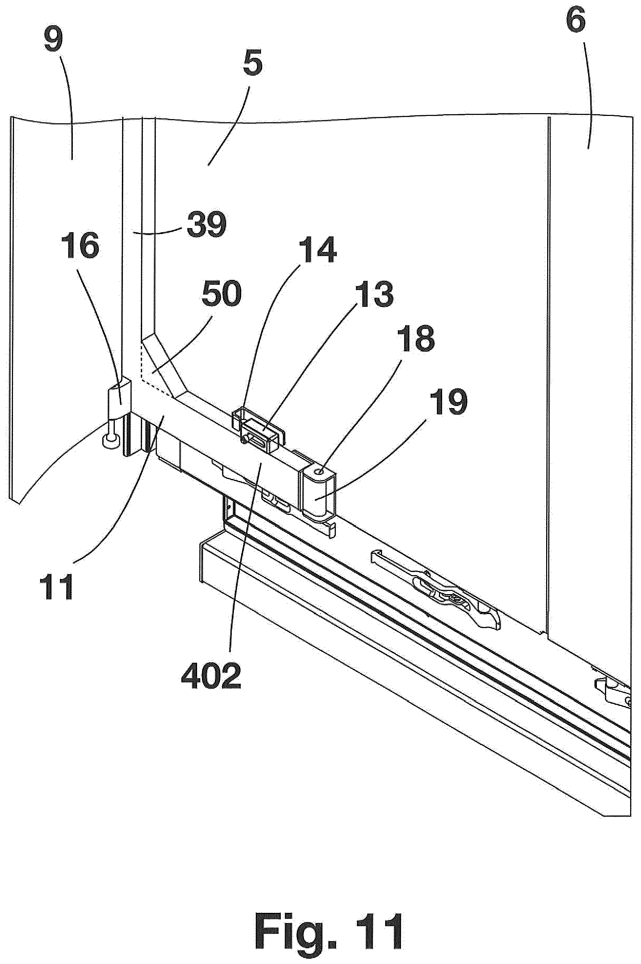

Les figures 10 et 11 représentent une vue détaillée de la partie inférieure gauche du véhicule utilitaire muni de dispositif de guidage d'air arrière constitué de deux structures supports rigides articulées (11, 12), lesdites structures support articulées étant respectivement fixées en bas au centre des portes arrières du véhicule côté battant à l'aide de premiers moyens de fixation (18, 19, 20, 21) de type pivot. Les figures 10 et 11 schématisent plus particulièrement la partie inférieure gauche de l'ouvrant gauche de la porte arrière (5) du véhicule utilitaire muni de dispositif de guidage d'air arrière constitué d'une structure support rigide articulée (11). La structure support rigide articulée (11) est fixée en bas au centre de l'ouvrant gauche (5) à l'aide de premiers moyens de fixation (18, 19) de type pivot. Un premier moyen de guidage d'air (9) est fixé au bas d'un premier élément vertical (39) à l'aide d'un second moyen de fixation (16) de type pivot, ledit premier élément vertical (39) comprenant une unité de verrouillage (16, 17) mécanique de type verrou sur ressort. Un troisième moyen de fixation temporaire (13, 14) de type verrou est situé sur l'élément horizontal inférieur (402). Un module de rigidification (50) sous forme d'un épaississement de la jonction entre le premier élément vertical (39) et le second élément horizontal (402) est également représenté, ledit module étant de même matière que le premier élément vertical (39).

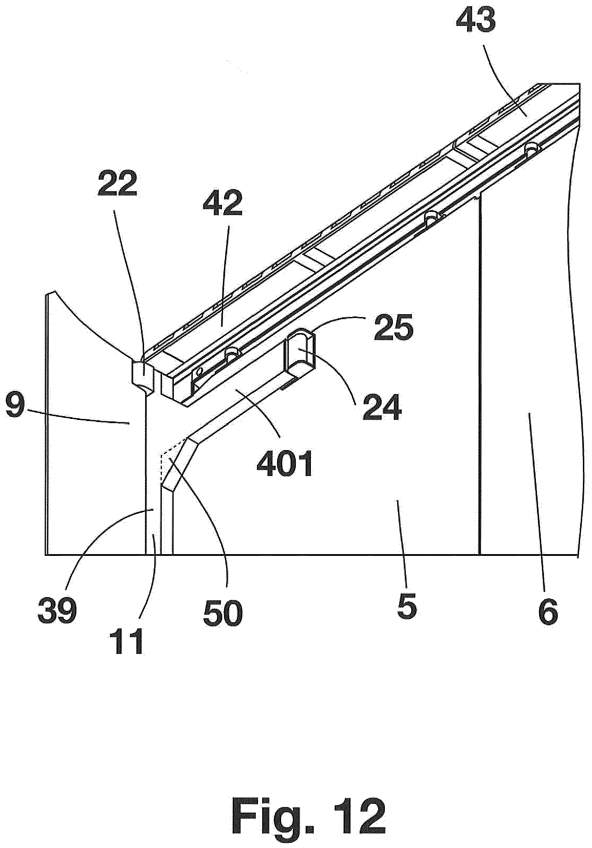

La figure 12 représente de manière schématique le positionnement de premiers moyens de fixation (24, 25,) de type pivot sur la partie supérieure de la structure support rigide articulée (11) et des portes du véhicule ainsi que la disposition des seconds moyens de guidage d'air (42, 43). Plus particulièrement, la figure 12 schématise la partie supérieure gauche du dispositif de guidage d'air arrière (2) selon l'invention. La partie gauche dudit dispositif de guidage d'air arrière comprend une structure support rigide articulée (11) fixée en haut au centre de l'ouvrant gauche (5) de la porte arrière (5, 6) du véhicule à l'aide d'un premier moyen de fixation (24, 25) de type pivot.

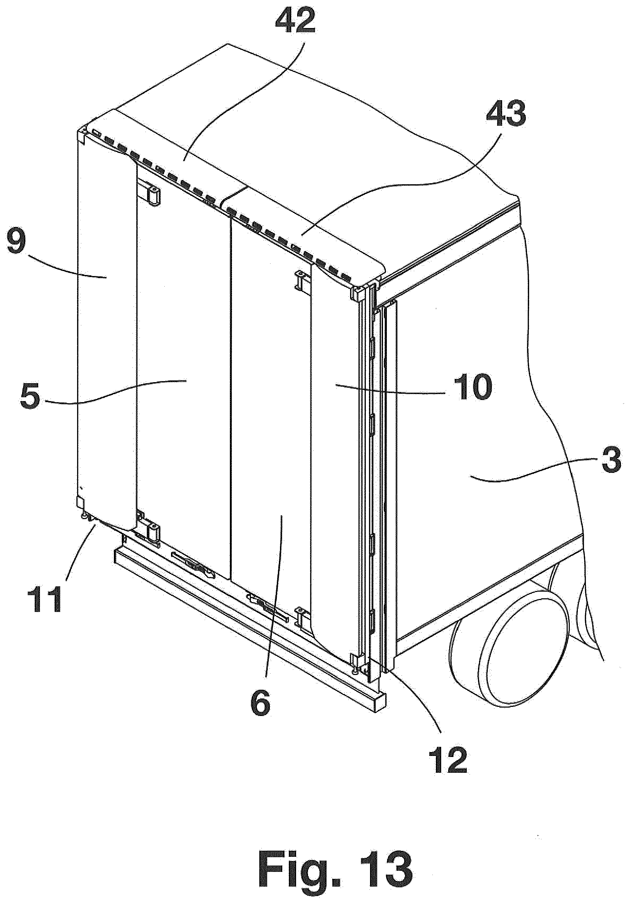

La figure 13 montre une vue arrière en perspective d'un véhicule utilitaire avec deux portes arrières fermées (5, 6), muni d'un dispositif de guidage d'air arrière selon le troisième mode de réalisation de l'invention, les premiers moyen de guidage d'air (9, 10) étant en position de repli. Ces premiers moyens de guidage d'air (9, 10) sont repliés sous les diffuseurs d'air (42, 43). La longueur des premiers moyens de guidage d'air (9, 10) est sensiblement égale, préférentiellement égale, à la hauteur de la paroi latérale (3) du véhicule. Les premiers de guidage d'air (9, 10) sont cependant dimensionnés de manière à ne pas être entravés par les diffuseurs d'air (42, 43) lors de leur repliement, la hauteur de ces premiers moyens de guidage d'air (9, 10) étant donc choisie de manière à ce qu'ils puissent se replier sous les diffuseurs d'air (42, 43).

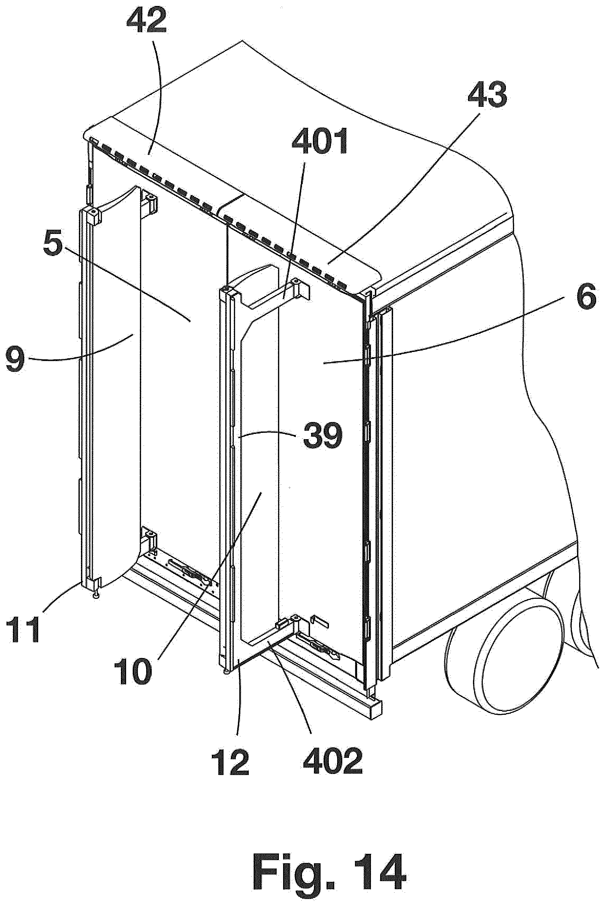

La figure 14 montre une vue arrière en perspective d'un véhicule utilitaire avec deux portes arrières fermées (5, 6), muni d'un dispositif de guidage d'air arrière selon le troisième mode de réalisation de l'invention, les deux structures support rigide articulées (11, 12) ayant pivoté de 90°, de manière à être perpendiculaires aux ouvrants gauche (5) et droit (6) de la porte arrière du véhicule.

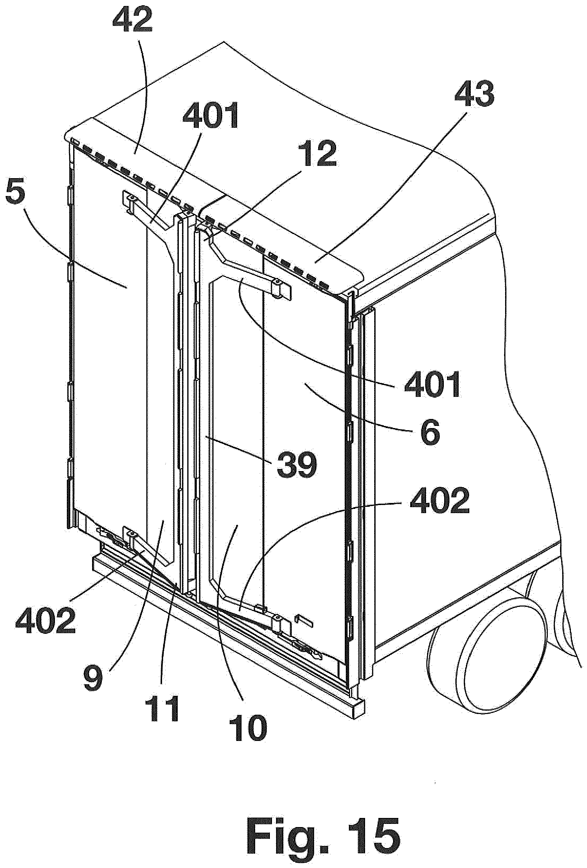

La figure 15 montre une vue arrière en perspective d'un véhicule utilitaire avec deux portes arrières fermées (5, 6), muni d'un dispositif de guidage d'air arrière selon le troisième mode de réalisation de l'invention, les deux structures support rigides (11, 12) ayant pivoté jusqu'à ce que les premiers moyens de guidage d'air (9, 10) repliés soient en contact avec les ouvrants gauches (5) et droits (6) de la porte arrière du véhicule. Cette position des structures support rigide articulées (11, 12) et des premiers moyens de guidage d'air (9, 10) permet une ouverture optimale de la porte arrière (5, 6) en évitant tout risque d'endommagement des premiers moyens de guidage d'air (9, 10).

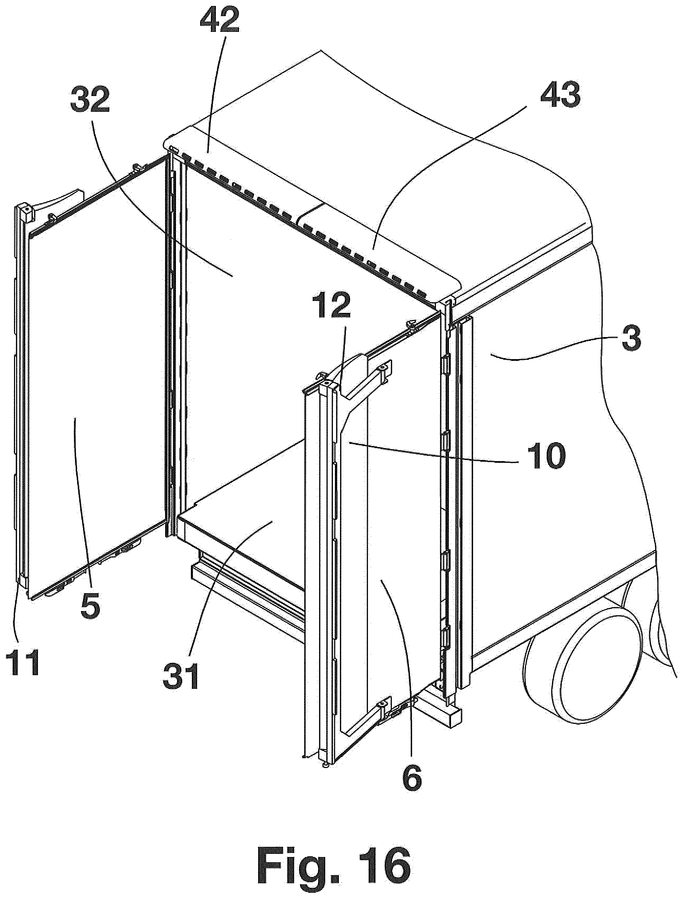

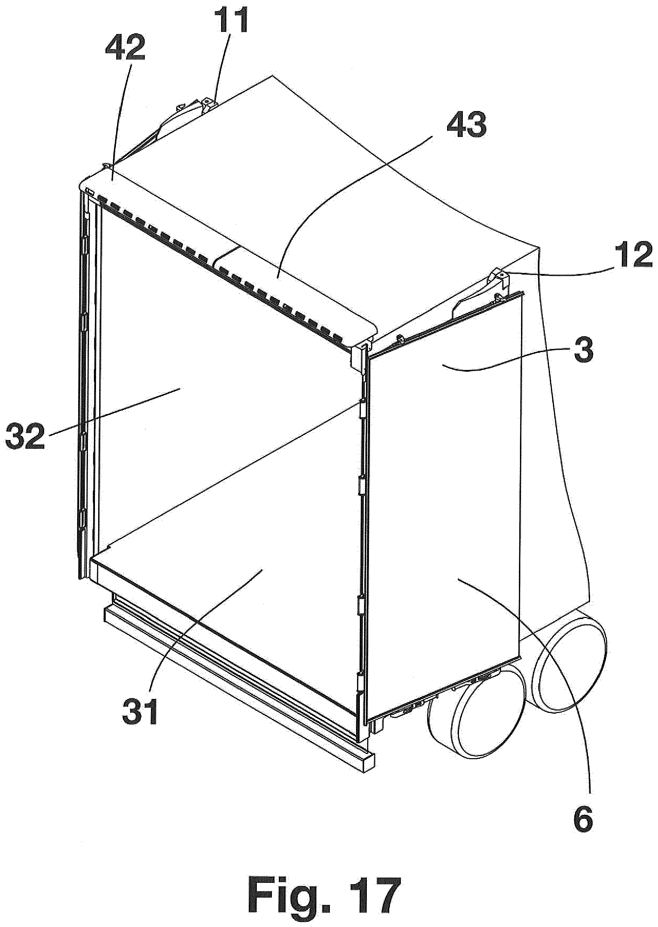

Les figures 16 et 17 illustrent l'ouverture de la porte arrière du véhicule muni d'un dispositif de guidage d'air arrière selon le troisième mode de réalisation de l'invention. On observe que le déploiement du dispositif de guidage d'air arrière en position de repli est terminé sans endommagement de ce dernier par compression entre les parois latérales et les portes arrière. Plus particulièrement, on observe, sur la paroi latérale (3) visible du véhicule utilitaire, le positionnement final d'une structure support rigide articulée (12) fixée sur une porte arrière (6) et des premiers moyens de guidage d'air (10). De part une telle ouverture, la surface de chargement (31) est pleinement accessible laissant également apparaître la paroi latérale intérieure (32) du véhicule utilitaire.

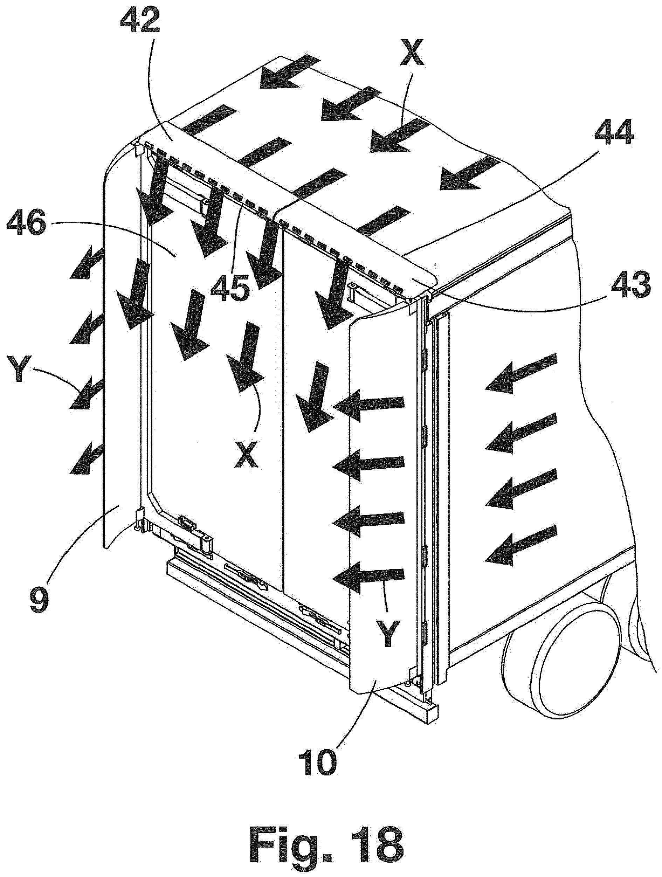

Les figures 18 à 20 illustrent la déflection d'air réalisée par un dispositif de guidage d'air arrière selon le troisième mode de réalisation de l'invention. Au niveau du toit du camion, les diffuseurs d'air (42, 43) acheminent l'air de la partie supérieure du véhicule via leur structure tubulaire de leurs entrées (44) vers leurs sorties (45). L'air ainsi expulsé au niveau des sorties (45) des diffuseurs d'air (42, 43) se retrouve dans la zone de dépression à l'arrière du véhicule causée par son mouvement vers l'avant. La conjonction des premiers moyens de déflection d'air (9, 10) et des diffuseurs d'air (42, 43) réduit de manière optimale la consommation de carburant du véhicule.

L'utilisation des structures support rigide articulées telles que décrites permet un dégagement total de la zone de diffusion de l'air à l'arrière du véhicule de par l'absence, au sein d'un dispositif de guidage d'air, d'élément additionnel de rigidification et/ou de liaison entre la porte arrière du véhicule, la structure et/ou l'élément de guidage d'air de type déflecteur. L'ajout de ce type d'élément additionnel crée une obstruction au bon écoulement du flux aérodynamique du diffuseur.

La combinaison entre des structures support rigide articulées équipées de moyens de guidage d'air verticaux de type déflecteur et un moyen de guidage d'air de type diffuseur sur le toit du véhicule délimite le flux aérodynamique à l'arrière du véhicule en flux horizontal (X) et verticaux (Z). En effet, l'utilisation de moyens de guidage d'air verticaux de type déflecteur isole et protège la zone de diffusion d'air arrière du moyen de guidage d'air horizontal supérieur de type diffuseur des flux aérodynamiques verticaux de la partie arrière du véhicule. Les flux aérodynamiques horizontaux et verticaux ne se croisant pas, l'écoulement général à l'arrière du véhicule s'en retrouve amélioré grâce à la diminution des perturbations d'écoulement.

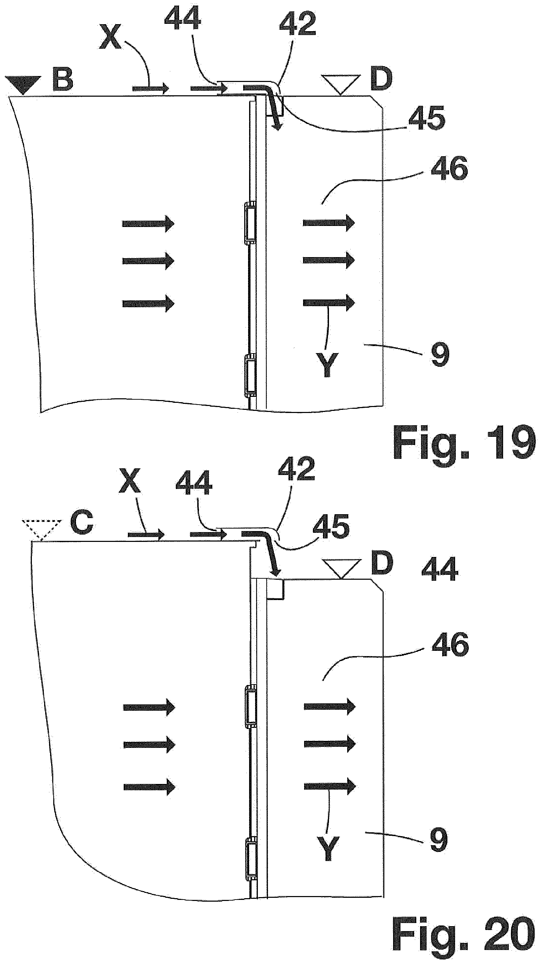

La figure 19 et 20 illustrent les flux d'air lorsque le toit du véhicule est abaissé (niveau B) ou surélevé (niveau C) pour s'adapter à son chargement, ledit toit étant monté sur des vérins pneumatiques.

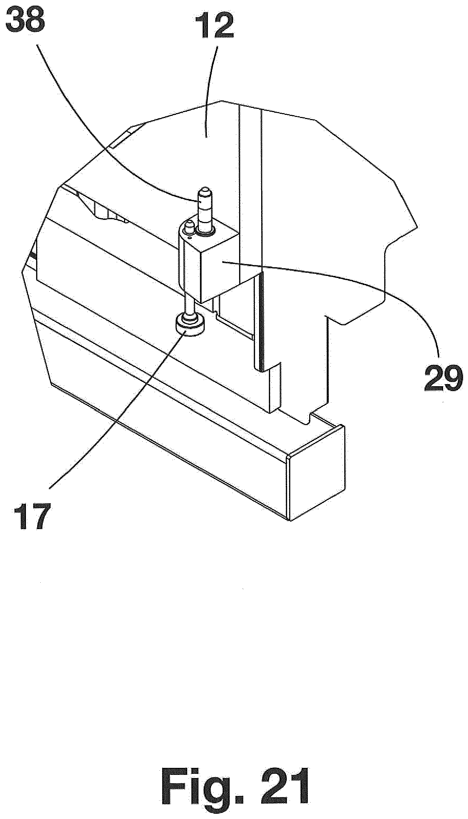

La figure 21 montre une vue détaillée d'une unité de verrouillage et de pivot du premier moyen de guidage d'air présente dans un dispositif de guidage d'air arrière selon l'invention. Le premier moyen de guidage d'air est fixé au bas d'un premier élément vertical (39) d'une structure support articulée (12) à l'aide d'un second moyen de fixation (29) de type pivot à axe (38), ledit premier élément vertical (39) comprenant une unité de verrouillage (17) mécanique de type verrou sur ressort.

Bien entendu, l'invention n'est pas limitée aux exemples de réalisation mentionnés ci-dessus.

En particulier, l'Homme du Métier pourra apporter toute variante dans la structure des premier et second moyens de guidage d'air, ceux-ci pouvant être constitué d'au moins un panneau en matériau rigide ou d'au moins un panneau en matériau flexible rigidifié par la présence d'une armature.

## Revendications

1. Structure support rigide articulée (11, 12) pour un dispositif de guidage d'air arrière (2) pour un véhicule (1), ledit véhicule (1) comprenant au moins une porte arrière (5, 6), ladite structure (11, 12) comprenant :
- au moins deux premiers moyens de fixation (18, 19, 20, 21, 24, 25, 26, 27), lesdits premiers moyens de fixation étant aptes à être fixés sur ladite porte arrière (5, 6) dudit véhicule et permettant la rotation de ladite structure (11, 12) par rapport à ladite porte (5, 6),
- au moins un premier élément vertical (39),
- au moins un premier moyen de guidage d'air (9, 10) situé sur le premier élément vertical (39), ledit premier moyen de guidage d'air étant fixé audit premier élément vertical (39) par au moins un second moyen de fixation (16, 22, 28, 29) permettant la rotation dudit premier moyen de guidage d'air (9, 10) par rapport audit premier élément vertical (39), ledit premier élément vertical (39) comprenant au moins une unité de verrouillage (17),
- au moins deux éléments horizontaux inférieur et supérieur (40), reliant les au moins deux premiers moyens de fixation (18, 19, 20, 21, 24, 25, 26, 27) au premier élément vertical (39),
- au moins un troisième moyen de fixation temporaire (13, 14) aptes à fixer la structure rigide articulée (11, 12) sur la porte arrière du véhicule (1), ledit au moins troisième moyen de fixation temporaire (13, 14) se situant sur le premier élément vertical (39) et/ou sur au moins un élément horizontal, de préférence sur les au moins deux éléments horizontaux (40).

2. Structure support rigide articulée (11, 12), selon la revendication 1, telle que le au moins un premier moyen de guidage d'air est un des moyens du groupe comprenant un moyen de guidage d'air du type déflecteur d'air (9,10) et un moyen de guidage d'air du type diffuseur d'air (9, 10)

3. Structure support rigide articulée (11, 12) selon l'une des revendications précédentes, tel qu'elle comprend au moins un second élément vertical se fixant aux au moins deux premiers moyens de fixation (18, 19, 20, 21, 24, 25, 26, 27), lesdits premier élément vertical, second élément vertical et éléments horizontaux (40) inférieur (402) et supérieur (401) formant un cadre de forme quadrilatère régulier.

4. Structure support rigide articulée (11, 12) selon l'une des revendications précédentes, tel que les au moins deux premier moyens de fixation (18, 19, 20, 21, 24, 25, 26, 27) sont de type pivot.

5. Structure support rigide articulée (11, 12) selon l'une des revendications précédentes, tel que le au moins troisième moyen de fixation temporaire (13, 14) est de type verrou.

6. Structure support rigide articulée (11, 12) selon l'une des revendications précédentes, tel que l'unité de verrouillage (17) est de type mécanique tel qu'un verrou sur ressort ou pneumatique (34) tel qu'un amortisseur pneumatique.

7. Structure support rigide articulée (11, 12) selon l'une des revendications précédentes, tel qu'elle comprend un joint périphérique interstitiel (30) entre ladite structure support rigide articulée (11, 12) et le véhicule (1).

8. Structure support rigide articulée (11, 12) selon l'une des revendications précédentes, tel qu'elle comprend au moins un second moyen de guidage d'air (7, 8) situé sur l'élément horizontal supérieur (401), ledit second moyen de guidage d'air (7, 8) étant fixé par au moins un quatrième moyen de fixation (23) audit élément supérieur horizontal (401) et permettant la rotation dudit second moyen de guidage d'air par rapport audit élément supérieur horizontal (401).

9. Structure support rigide articulée (11, 12) selon la revendication 8, tel que le second moyen de guidage d'air (7, 8) comprend au moins deux panneaux reliés entre eux par des moyens de rigidification (36, 37).

10. Structure support rigide articulée (11, 12) selon l'une des revendications 8 à 9, tel que le second moyen de guidage d'air (7, 8) comprend un module de rappel (41).

11. Dispositif de guidage d'air arrière (2) pour un véhicule (1), ledit véhicule (1) comprenant une porte arrière (5, 6), ladite porte arrière comprenant un ouvrant gauche (5) et un ouvrant droit (6), **caractérisé en ce qu'**il comprend une première structure support rigide articulée (11) selon l'une des revendications 1 à 7, ladite première structure support articulée (11) étant fixée sur l'ouvrant gauche (5) de ladite porte arrière (5, 6), et **en ce qu'**il comprend une seconde structure support rigide articulée (12) selon l'une des revendications 1 à 7, la seconde structure support articulée (12) étant fixée sur l'ouvrant droit (6) de ladite porte arrière (5, 6).

12. Dispositif de guidage d'air arrière (2) pour un véhicule (1), ledit véhicule (1) comprenant une porte arrière (5, 6), ladite porte arrière comprenant un ouvrant gauche (5) et un ouvrant droit (6), **caractérisé en ce qu'**il comprend une première structure support rigide articulée (11) selon l'une des revendications 8 à 10, ladite première structure support articulée (11) étant fixée sur l'ouvrant gauche (5) de ladite porte arrière (5, 6), et **en ce qu'**il comprend une seconde structure support rigide articulée (12) selon l'une des revendications 8 à 10, la seconde structure support articulée (12) étant fixée sur l'ouvrant droit (6) de ladite porte arrière (5, 6).

13. Dispositif de guidage d'air arrière selon l'une des revendications 11 et 12, tel qu'un moyen de maintien additionnel (15) de maintien de la structure support rigide (11, 12) est fixé sur le véhicule (1).

14. Dispositif de guidage d'air arrière (2) pour un véhicule (1) selon la revendication 11, **caractérisé en ce qu'**il comprend déflecteur ou diffuseur d'air (42, 43) fixé sur le toit du véhicule.

15. Véhicule comprenant un dispositif de guidage d'air arrière selon l'une quelconque des revendications 11 à 14.

## Patentansprüche

1. Starre Gelenkträgerstruktur (11, 12) für eine hintere Luftleitvorrichtung (2) für ein Fahrzeug (1), wobei das Fahrzeug (1) mindestens eine Hecktür (5, 6) umfasst, wobei die Struktur (11, 12) umfasst:
- mindestens zwei erste Befestigungsmittel (18, 19, 20, 21, 24, 25, 26, 27), wobei die ersten Befestigungsmittel geeignet sind, um an der Hecktür (5, 6) des Fahrzeugs befestigt zu sein, und die Drehung der Struktur (11, 12) im Verhältnis zur Tür (5, 6) zulassen,
- mindestens ein erstes senkrechtes Element (39),
- mindestens ein erstes Luftleitmittel (9, 10), das sich an dem ersten senkrechten Element (39) befindet, wobei das erste Luftleitmittel an dem ersten senkrechten Element (39) durch mindestens ein zweites Befestigungsmittel (16, 22, 28, 29) befestigt ist, das die Drehung des ersten Luftleitmittels (9, 10) im Verhältnis zu dem ersten senkrechten Element (39) zulässt, wobei das erste senkrechte Element (39) mindestens eine Verriegelungseinheit (17) umfasst,
- mindestens zwei untere und obere waagerechte Elemente (40), welche die mindestens zwei ersten Befestigungsmittel (18, 19, 20, 21, 24, 25, 26, 27) an dem ersten senkrechten Element (39) befestigen,
- mindestens ein drittes zeitweiliges Befestigungsmittel (13, 14), das geeignet ist, um die starre Gelenkträgerstruktur (11, 12) an der Hecktür des Fahrzeugs (1) zu befestigen, wobei sich das mindestens dritte zeitweilige Befestigungsmittel (13, 14) an dem ersten senkrechten Element (39) und/oder an mindestens einem waagerechten Element, bevorzugt an den mindestens zwei waagerechten Elementen (40), befindet.

2. Starre Gelenkträgerstruktur (11, 12) nach Anspruch 1, so dass das mindestens eine Luftleitmittel eines der Mittel der Gruppe ist, die ein Luftleitmittel nach Art eines Luftleitblechs (9, 10) und ein Luftleitmittel nach Art eines Luftverteilers (9, 10) umfasst.

3. Starre Gelenkträgerstruktur (11, 12) nach einem der vorhergehenden Ansprüche, so dass sie mindestens ein zweites senkrechtes Element umfasst, das an den mindestens zwei ersten Befestigungsmitteln (18, 19, 20, 21, 24, 25, 26, 27) befestigt wird, wobei das erste senkrechte Element, das zweite senkrechte Element und die unteren (402) und oberen (401) waagerechten Elemente (40) einen Rahmen mit der Form eines regelmäßigen Vierecks bilden.

4. Starre Gelenkträgerstruktur (11, 12) nach einem der vorhergehenden Ansprüche, so dass die mindestens zwei ersten Befestigungsmittel (18, 19, 20, 21, 24, 25, 26, 27) nach Art eines Drehzapfens sind.

5. Starre Gelenkträgerstruktur (11, 12) nach einem der vorhergehenden Ansprüche, so dass das mindestens dritte zeitweilige Befestigungsmittel (13, 14) nach Art eines Riegels ist.

6. Starre Gelenkträgerstruktur (11, 12) nach einem der vorhergehenden Ansprüche, so dass die Verriegelungseinheit (17) mechanischer Art, wie etwa ein gefederter oder pneumatischer Riegel (34), wie etwa ein pneumatischer Dämpfer, ist.

7. Starre Gelenkträgerstruktur (11, 12) nach einem der vorhergehenden Ansprüche, so dass sie eine Zwischenumfangsdichtung (30) zwischen der starren Gelenkträgerstruktur (11, 12) und dem Fahrzeug (11) umfasst.

8. Starre Gelenkträgerstruktur (11, 12) nach einem der vorhergehenden Ansprüche, so dass sie mindestens ein zweites Luftleitmittel (7, 8) umfasst, das sich an dem oberen waagerechten Element (401) befindet, wobei das zweite Luftleitmittel (7, 8) durch mindestens ein viertes Befestigungsmittel (23) an dem waagerechten oberen Element (401) befestigt ist und die Drehung des zweiten Luftleitmittels im Verhältnis zu dem waagerechten oberen Element (401) zulässt.

9. Starre Gelenkträgerstruktur (11, 12) nach Anspruch 8, so dass das zweite Luftleitmittel (7, 8) mindestens zwei Platten umfasst, die durch Versteifungsmittel (36, 37) miteinander verbunden sind.

10. Starre Gelenkträgerstruktur (11, 12) nach einem der Ansprüche 8 bis 9, wo dass das zweite Luftleitmittel (7, 8) ein Rückstellmodul (41) umfasst.

11. Heckluftleitvorrichtung (2) für ein Fahrzeug (1), wobei das Fahrzeug (1) eine Hecktür (5, 6) umfasst, wobei die Hecktür ein linkes Öffnungselement (5) und ein rechtes Öffnungselement (6) umfasst, **dadurch gekennzeichnet, dass** sie eine erste starre Gelenkträgerstruktur (11) nach einem der Ansprüche 1 bis 7 umfasst, wobei die erste Gelenkträgerstruktur (11) an dem linken Öffnungselement (5) der Hecktür (5, 6) befestigt ist, und dass sie eine zweite starre Gelenkträgerstruktur (12) nach einem der Ansprüche 1 bis 7 umfasst, wobei die zweite Gelenkträgerstruktur (12) an dem rechten Öffnungselement (6) der Hecktür befestigt ist.

12. Heckluftleitvorrichtung (2) für ein Fahrzeug (1), wobei das Fahrzeug (1) eine Hecktür (5, 6) umfasst, wobei die Hecktür ein linkes Öffnungselement (5) und ein rechtes Öffnungselement (6) umfasst, **dadurch gekennzeichnet, dass** sie eine erste starre Gelenkträgerstruktur (11) nach einem der Ansprüche 8 bis 10 umfasst, wobei die erste Gelenkträgerstruktur (11) an dem linken Öffnungselement (5) der Hecktür (5, 6) befestigt ist, und dass sie eine zweite starre Gelenkträgerstruktur (12) nach einem der Ansprüche 8 bis 10 umfasst, wobei die zweite Gelenkträgerstruktur (12) an dem rechten Öffnungselement (6) der Hecktür befestigt ist.

13. Heckluftleitvorrichtung nach einem der Ansprüche 11 und 12, so dass ein zusätzliches Haltemittel (15) zum Halten der starren Trägerstruktur (11, 12) an dem Fahrzeug (1) befestigt ist.

14. Heckluftleitvorrichtung (2) für ein Fahrzeug (1) nach Anspruch 11, **dadurch gekennzeichnet, dass** sie ein Luftleitbleich oder einen Luftverteiler (42, 43) umfasst, das bzw. der auf dem Dach des Fahrzeugs befestigt ist.

15. Fahrzeug, umfassend eine Heckluftleitvorrichtung nach einem der Ansprüche 11 bis 14.

## Claims

1. Articulated rigid support structure (11, 12) for a rear air guiding device (2) for a vehicle (1), said vehicle (1) comprising at least one rear door (5, 6), said structure (11, 12) comprising:
- at least two first fastening means (18, 19, 20, 21, 24, 25, 26, 27), said first fastening means being capable of being secured to the rear door (5, 6) of the vehicle and enabling the rotation of the structure (11, 12) in relation to the door (5, 6),
- at least one first vertical element (39),
- at least one first air guiding means (9, 10) that is arranged on the first vertical element (39), said first air guiding means being secured to said first vertical element (39) by at least one second fastening means (16, 22, 28, 29), enabling the first air guiding means (9, 10) to rotate in relation to the first vertical element (39), said first vertical element (39) comprising at least one locking unit (17),
- at least two lower and upper horizontal elements connecting the at least two first fastening means (18, 19, 20, 21, 24, 25, 26, 27) to the first vertical element (39),
- at least one third temporary fastening means (13, 14) capable of securing the articulated rigid structure (11, 12) to the rear door of the vehicle (1), said at least third temporary fastening means (13, 14) being arranged on the first vertical element (39) and/or on at least one horizontal element, preferably on the at least two horizontal elements (40).

2. Articulated rigid support structure (11, 12) as set forth in claim 1, such in that the at least one first air guiding means is one of the means from the group comprising an air deflector-type air guiding means (9, 10) and an air diffuser-type air guiding means (9, 10).

3. Articulated rigid support structure (11, 12) as set forth in any one of the preceding claims, such that it comprises at least one second vertical element that is secured to the at least two first fastening means (18, 19, 20, 21, 24, 25, 26, 27), said first vertical element, second vertical element, and lower (402) and upper (401) horizontal elements (40) forming a regular quadrilateral frame.

4. Articulated rigid support structure (11, 12) as set forth in any one of the preceding claims, such that the at least two first fastening means (18, 19, 20, 21, 24, 25, 26, 27) are of a pivot type.

5. Articulated rigid support structure (11, 12) as set forth in any one of the preceding claims, such that the at least third temporary fastening means (13, 14) is of a latch type.

6. Articulated rigid support structure (11, 12) as set forth in any one of the preceding claims, such that the locking unit (17) is of a mechanical type such as a spring or pneumatic latch (34) such as a pneumatic shock absorber.

7. Articulated rigid support structure (11, 12) as set forth in any one of the preceding claims, such that it comprises an interstitial peripheral seal (30) between said articulated rigid support structure (11, 12) and the vehicle (1).

8. Articulated rigid support structure (11, 12) as set forth in any one of the preceding claims, such that it comprises at least one second air guiding means (7, 8) that is arranged on the upper horizontal element (401), said second air guiding means (7, 8) being secured by at least one fourth fastening means (23) to the upper horizontal element (401) and enabling rotation of the second air guiding means in relation to the upper horizontal element (401).

9. Articulated rigid support structure (11, 12) as set forth in claim 8, such that the second air guiding means (7, 8) comprises at least two panels that are interconnected by stiffening means (36, 37).

10. Articulated rigid support structure (11, 12) as set forth in any one of claims 8 to 9, such that the second air guiding means (7, 8) comprises a return module (41).

11. Rear air guiding device (2) for a vehicle (1), said vehicle (1) comprising a rear door (5, 6), said rear door comprising a left door panel (5) and a right door panel (6), **characterized in that** it comprises a first articulated rigid support structure (11) as set forth in any one of claims 1 to 7, said first articulated support structure (11) being secured to the left door panel (5) of said rear door (5, 6), and **in that** it comprises a second articulated rigid support structure (12) as set forth in any one of claims 1 to 7, with the second articulated support structure (12) being secured to the right door panel (6) of the rear door (5, 6).

12. Rear air guiding device (2) for a vehicle (1), said vehicle (1) comprising a rear door (5, 6), said rear door comprising a left door panel (5) and a right door panel (6), **characterized in that** it comprises a first articulated rigid support structure (11) as set forth in any one of claims 8 to 10, said first articulated support structure (11) being secured to the left door panel (5) of the rear door (5). , 6), and **in that** it comprises a second articulated rigid support structure (12) as set forth in any one of claims 8 to 10, with the second articulated support structure (12) being secured to the right door panel (6) of the rear door (5, 6).

13. Rear air guiding device as set forth in any one of claims 11 and 12, such that an additional holding means (15) for holding the rigid support structure (11, 12) is secured to the vehicle (1).

14. Rear air guiding device (2) for a vehicle (1) as set forth in claim 11, **characterized in that** it comprises a deflector or air diffuser (42, 43) that is secured to the roof of the vehicle.

15. Vehicle comprising a rear air guiding device as set forth in any one of claims 11 to 14.
